# EUROPÄISCHE PATENTSCHRIFT

(11) **EP 1 858 320 B1**
(45) Veröffentlichungstag und Bekanntmachung des Hinweises auf die Patenterteilung: **19.12.2018**
(21) Anmeldenummer: 06708666.0
(22) Anmeldetag: 07.03.2006
(51) Int. Cl.: A01N 25/04, A01N 25/10

(54) **VERFAHREN ZUR HERSTELLUNG VON AGROCHEMISCHEN WÄSSRIGEN POLYMERDISPERSIONEN UND IHRE VERWENDUNG**
METHOD FOR PRODUCING AGROCHEMICAL AQUEOUS POLYMER DISPERSIONS AND USE THEREOF
PROCEDE DE FABRICATION DE DISPERSIONS AGROCHIMIQUES POLYMERES AQUEUSES ET LEUR UTILISATION

(30) Priorität: 10.03.2005 EP 05002533
(43) Veröffentlichungstag der Anmeldung: 28.11.2007
(73) Patentinhaber: BASF SE, 67056 Ludwigshafen am Rhein (DE)
(72) Erfinder: DYLLICK-BRENZINGER, Rainer, 67346 Speyer (DE); BRATZ, Matthias, 67133 Maxdorf (DE); KRÜGER, Christian, 55291 Saulheim (DE); OETTER, Günter, 67227 Frankenthal (DE); GÖRTH, Felix, Christian, 67061 Ludwigshafen (DE)
(86) Internationale Anmeldenummer: PCT/EP2006/060516
(87) Internationale Veröffentlichungsnummer: WO 2006/094978

(56) Entgegenhaltungen:
- WO-A-99/40123
- WO-A-2004/037867
- WO-A-2005/046328
- WO-A-2005/087816
- WO-A-2005/102044
- WO-A2-02/45507

## Beschreibung

Die Erfindung betrifft ein Verfahren zur Herstellung von Wirkstoffe enthaltenden wässrigen Polymerdispersionen gemäss Anspruch 1 und die Verwendung der Dispersionen zur Regulation des Wachstums von Pflanzen und/oder zur Bekämpfung unerwünschten Pflanzenwuchses und/oder zur Bekämpfung von unerwünschtem Insekten- oder Milbenbefall auf Pflanzen und/oder zur Bekämpfung von phytopathogenen Pilzen und/oder zur Behandlung von Saatgut.

Aus der JP-A-7-292009 sind wässrige Polymerdispersionen bekannt, die funktionelle Substanzen wie insbesondere UV-Absorber oder Epoxidharze enthalten. Sie werden durch Lösen der funktionellen Substanzen in einem ungesättigtem Monomer, Emulgieren dieser Lösung in Wasser in Gegenwart eines oberflächenaktiven Mittels zu einer Monomeremulsion mit mittleren Teilchengrößen zwischen 5 und 500 nm und Polymerisieren der Miniemulsion in Gegenwart eines radikalischen Initiators hergestellt. Die wässrigen Dispersionen, die die funktionellen Substanzen wie UV-Absorber, Epoxidharze, Polymere auf Acrylbasis, Phenolharze, ungesättigte Polyester, Substanzen auf Phenolbasis sowie Erdölharze enthalten, werden als Bindemittel und als Additiv für Schutzschichtfolien verwendet.

Aus der WO 99/40123 ist ein Verfahren zur Herstellung von wässrigen Polymerdispersionen bekannt, deren dispergierte Polymerteilchen einen organischen Farbstoff homogen, d.h. molekulardispers verteilt enthalten. Solche wässrigen Dispersionen werden durch Miniemulsionspolymerisation hergestellt, indem man ethylenisch ungesättigte Monomere, die einen organischen Farbstoff gelöst enthalten, in Form einer Öl-in-Wasser-Emulsion in Gegenwart von Radikale bildenden Polymerisationsinitiatoren polymerisiert, wobei die disperse Phase der Emulsion im Wesentlichen von farbstoffhaltigen Monomertröpfchen mit einem Durchmesser < 500 nm gebildet wird. In einer vorteilhaften Ausführungsform der Erfindung setzt man bei der Polymerisation Monomermischungen ein, die vernetzend wirkende Monomere enthalten. Die Polymerdispersionen sind sedimentationsstabil. Die dispergierten Teilchen haben einen mittleren Teilchendurchmesser von 100 bis 400 nm. Sie können mit Hilfe konventioneller Trocknungsmethoden aus den wässrigen Dispersionen gewonnen werden. Die farbstoffhaltigen Polymerdispersionen werden beispielsweise zur Pigmentierung von hochmolekularen organischen und anorganischen Materialien, zur Pigmentierung von Druckfarben und von Tinten für den Ink-Jet-Druck verwendet.

Aus der EP-A-1 092 416 ist die Verwendung von Farbstoffe, optische Aufheller oder UV-Absorber enthaltenden feinteiligen, wäßrigen Polymerdispersionen oder eines daraus erhältlichen pulverförmigen Polymers, dessen Polymermatrix Farbstoffe, optische Aufheller oder UV-Absorber homogen verteilt enthält, als farbgebender Bestandteil in kosmetischen Mitteln bekannt. Die Dispersionen werden vorzugsweise nach dem aus der WO-A-99/40123 bekannten Verfahren durch Miniemulsionspolymerisation von ethylenisch ungesättigten Monomeren, die einen Farbstoff, optischen Aufheller oder UV-Absorber gelöst enthalten, hergestellt.

Weitere farbmittelhaltige Polymerdispersionen, deren farbmittelhaltige Polymerisatteilchen einen mittleren Teilchendurchmesser unterhalb von 1000 nm haben, sind aus der EP-A-1 191 041 bekannt. Als Farbmittel kommen neben organischen Farbstoffen auch UV-Absorber und optische Aufheller in Betracht. Sie werden durch Lösen eines Farbmittels in mindestens einem ethylenisch ungesättigten Monomer, Emulgieren dieser Lösung in Wasser unter Bildung einer konventionellen Makroemulsion, Homogenisieren der Makroemulsion unter Bildung einer Miniemulsion mit einer mittleren Tröpfchengröße von unterhalb 1000 nm und Polymerisieren der Miniemulsion in Gegenwart eines Radikale bildenden Polymerisationsinitiators, 0,1 bis 20 Gew.-% wenigstens einer nichtionischen oberflächenaktiven Verbindung und 1 bis 50 Gew.-%, jeweils bezogen auf die eingesetzten Monomeren, wenigstens eines amphiphilen Polymerisats hergestellt. Die Polymerteilchen enthalten 0,5 bis 50 Gew.-%, mindestens eines organischen Farbstoffs, optischen Aufhellers oder UV-Absorbers homogen verteilt, worunter verstanden werden soll, dass die organischen Farbmittel in der Polymermatrix monomolekular gelöst sind oder in Form von bi- oder höhermolekularen Aggregaten vorliegen.

Aus der WO 01/10936 sind Teilchen mit Kern/Schale-Struktur bekannt, bei denen der Kern ein Polymer mit einer Glastemperatur T_{g} von unterhalb 40°C und einen UV-Absorber umfasst und die Schale vorzugsweise aus einem Polymer aus Methylacrylat, Ethylacrylat, Ethylmethacrylat und/oder Methylmethacrylat besteht. Das Polymere, das den Kern des Teilchens bildet, kann gegebenenfalls vernetzt sein. Die Polymerteilchen werden durch Emulsionspolymerisation hergestellt. Die UV-Absorber enthaltenden Polymerteilchen werden zur Herstellung von UV-absorbierenden Polymerzusammensetzungen verwendet.

Aus der WO 2004/037867 sind Alkyldiketene enthaltende wäßrige Polymerdispersionen bekannt, die durch Miniemulsionspolymerisation von hydrophoben monoethylenisch ungesättigten Monomeren in Gegenwart von Alkyldiketenen erhältlich sind. Diese Dispersionen werden als Leimungsmittel für Papier, als Hydrophobierungsmittel für Leder, natürliche und/oder synthetische Fasern und Textilien verwendet.

Aus der WO 2004/046234 ist die Verwendung feinteiliger, wenigstens einen UV-Absorber enthaltender Polymerpulver zur Stabilisierung von Polymeren gegen die Einwirkung von UV-Strahlung bekannt. Die Polymerteilchen der Polymerpulver haben eine Teilchengröße von 500 nm oder darunter. Sie werden vorzugsweise durch Miniemulsionspolymerisation nach Verfahren hergestellt, die aus den obengenannten Schriften WO 99/40123, EP-A 1 092 415 und EP-A 1 191 041 bekannt sind. Die Polymerteilchen enthalten 0,5 bis 50 Gew.-% wenigstens eines UV-Absorbers, der darin entweder homogen verteilt in molekularer oder nanokristalliner Form vorliegt oder aber vollständig oder auch nur teilweise durch die Polymermatrix umhüllt ist.

Aus der US 6,309,787 ist ein Verfahren zum Verkapseln von Farbstoffen durch Miniemulsionspolymerisation bekannt, wobei man die Miniemulsion in Gegenwart eines oberflächenaktiven Mittels, eines Co-Surfactants und eines nichtionischen oberflächenaktiven Mittels herstellt. Nach der Polymerisation erhält man dispergierte Teilchen, die aus einem Farbstoffkern und einer Polymerschale aufgebaut sind.

Aus der DE-A 196 28 143 ist ein Verfahren zur Herstellung einer wässrigen Polymerdispersion bekannt. Die Polymerisation der Monomeren erfolgt nach Art einer radikalischen wässrigen Miniemulsionspolymerisation, bei der der Polymerisationszone unter fortwährender Polymerisation wenigstens ein Teil der wässrigen Monomerenminiemulsion kontinuierlich zugeführt wird.

Aus WO 2005/087816, welches die Priorität der älteren Anmeldung 10 2004 012 576.7 beansprucht, sind Effektstoffe enthaltende wässrige Polymerdispersionen mit einem mittleren Teilchendurchmesser der dispergierten Teilchen von <500 nm bekannt, wobei die Polymerteilchen eine aus mindestens einem ethylenisch ungesättigten Monomeren aufgebaute Polymermatrix als Kern enthalten, auf dessen Oberfläche zumindest teilweise ein Effektstoff angeordnet ist, der in den Monomeren löslich ist, die die Polymermatrix der Teilchen bilden. Diese Polymerdispersionen werden hergestellt, indem man zunächst eine Miniemulsion durch Emulgieren von ethylenisch ungesättigten Monomeren in Wasser in Gegenwart mindestens eines Effektstoffs und eines oberflächenaktiven Mittels mit einer mittleren Tropfengröße der emulgierten Teilchen von <500 nm bereitet und sie derart in Gegenwart mindestens eines radikalischen Polymerisationsinitiators polymerisiert, dass zunächst nur maximal 50 % der Monomeren polymerisieren, die sich in der Polymerisationszone befinden und wobei die Effektstoffe an die Oberfläche der emulgierten Teilchen wandern, und die Polymerisation erst nach weitgehender oder vollständiger Ansammlung der Effektstoffe auf der Oberfläche der entstehenden Polymerteilchen zu Ende führt. Die so erhältlichen Dispersionen und die daraus durch Verdampfen der flüchtigen Bestandteile entstehenden Polymerpulver werden beispielsweise zur Stabilisierung von Polymeren gegen die Einwirkung von UV-Strahlung, Sauerstoff und Wärme, in kosmetischen und pharmazeutischen Formulierungen, in Lackschichten, bei der Herstellung von Papier, Leder und Textilien und in Formulierungen für die Tierernährung verwendet.

Im Pflanzenschutz werden Pestizide, die in Wasser nur eine geringe Löslichkeit aufweisen, häufig in Form wässriger Suspensionen oder Emulsionen formuliert. Während Emulsionen üblicherweise noch organische Lösungsmittel enthalten, werden Suspensionen üblicherweise lösungsmittelfrei formuliert. In diesen Suspensionen liegt der Wirkstoff in Form feiner Partikel mit Teilchengrößen im µm-Bereich vor.

Verschiedentlich wurde vorgeschlagen, wasserunlösliche fungizide Wirkstoffe in Form wässriger Mikroemulsionen zu formulieren (siehe z. B. WO 02/082900, WO 02/45507 und WO 99/65301). Im Gegensatz zu konventionellen, üblicherweise milchig-trüben Makroemulsionen, in denen die dispergierte Phase Tropfengrößen deutlich oberhalb 1 µm aufweist, liegen die Wirkstoffe in den klaren bis opaken Mikroemulsionen in feinverteilter Form mit Tropfengrößen deutlich unterhalb 1000 nm bis hin zu 10 nm oder darunter vor [siehe hierzu D.J. Shaw, Introduction to Colloid and Surface Chemistry, Butterworths, London 1986, S.273].

Aus WO2005/10244, welches die Priorität der älteren DE-Anmeldung 10 2004 020 332.6 beansprucht, ist eine wässrige Wirkstoffzusammensetzung bekannt, die wenigstens einen fungiziden organischen Wirkstoff mit einer Wasserlöslichkeit von nicht mehr als 5 g/l bei 25°C und 1013 mbar und ein feinteiliges Polymerisat mit einer mittleren Teilchengröße von nicht mehr als 300 nm hat, wobei die Polymerteilchen den Wirkstoff enthalten. Das Polymer ist aus wenigstens 60 Gew.-% wenigstens eines neutralen, monoethylenisch ungesättigten Monomeren mit einer Wasserlöslichkeit von nicht mehr als 30 g/l bei 25°C und bis zu 40 Gew.-%, jeweils bezogen auf die Gesamtmenge der Monomeren, mindestens eines anderen ethylenisch ungesättigten Monomeren aufgebaut. Solche Wirkstoffzusammensetzungen sind durch radikalische, wässrige Emulsionspolymerisation einer ÖI-in-Wasser-Emulsion der ethylenisch ungesättigten Monomeren zugänglich, die wenigstens einen fungiziden Wirkstoff und gegebenenfalls einen insektiziden Wirkstoff enthalten. Die Stabilität der wässrigen Dispersionen ist jedoch noch verbesserungsbedürftig.

Der vorliegenden Erfindung liegt die Aufgabe zugrunde, ein Verfahren zur Herstellung von Agrowirkstoffe enthaltenden, wässrigen Polymerdispersionen zur Verfügung zu stellen, die die Agrowirkstoffe bei der jeweiligen Anwendung kontrolliert freisetzen, oder sie aber migrationsstabil zur Verfügung stellen oder sie vor Zersetzung schützen.

Die Aufgabe wird erfindungsgemäß gelöst mit einem Verfahren gemäss Anspruch 1.

Die hier angegebenen Teilchengrößen des feinteiligen Polymerisats sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429. Die mittlere Teilchengröße liegt vorzugsweise im Bereich von 10 bis 250 nm, insbesondere im Bereich von 20 bis 200 nm, besonders bevorzugt im Bereich von 30 bis 150 nm und ganz besonders bevorzugt im Bereich von 30 bis 100 nm.

Vorzugsweise handelt es sich bei dem Wirkstoff um einen organischen Wirkstoff mit einer geringen Wasserlöslichkeit von in der Regel nicht mehr als 5 g/l, vorzugsweise nicht mehr als 3 g/l. Die folgende Liste von Insektiziden zeigt mögliche Wirkstoffe auf, soll aber nicht auf diese beschränkt sein:
- Organo(thio)phosphate wie Acephate, Azamethiphos, Azinphos-methyl, Chlorpyrifos, Chlorpyriphos-methyl, Chlorfenvinphos, Diazinon, Dichlorphos, Dicrotophos, Dimethoate, Disulfoton, Ethion, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, Sulprophos, Triazophos, Trichlorfon;
- Carbamate wie Alanycarb, Benfuracarb, Bendiocarb, Carbaryl, Carbosulfan, Fenoxycarb, Furathiocarb, Indoxacarb, Methiocarb, Methomyl, Oxamyl, Pirimicarb, Propoxur, Thiodicarb, Triazamat;
- Pyrethroide wie Allethrin, Bifenthrin, Cyfluthrin, Cyphenothrin, Cypermethrin sowie die alpha-, beta-, theta- und zeta-Isomere, Deltamethrin, Esfenvalerat, Ethofenprox, Fenpropathrin, Fenvalerat, Cyhalothrin, Lambda-Cyhalothrin, Imiprothrin, Permethrin, Prallethrin, Pyrethrin I, Pyrethrin II, Silafluofen, Tau-Fluvalinat, Tefluthrin, Tetramethrin, Tralomethrin, Transfluthrin, Zeta-Cypermethrin;
- Arthropode Wachstumsregulatoren wie a) Chitinsyntheseinhibitoren; z. B. Benzoylharnstoffe wie Chlorfluazuron, Cyromacin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson Antagonisten wie Halofenozide, Methoxyfenozide, Tebufenozide; c) Juvenoide wie Pyriproxyfen, Methopren, Fenoxycarb; d) Lipidbiosynthese-Inhibitoren wie Spirodic-Iofen;
- Neonicotinoid wie Flonicamid, Clothianidin, Dinotefuran, Imidacloprid, Thiamethoxam, Nitenpyram, Nithiazin, Acetamiprid, Thiacloprid;
- Pyrazol-Insektizide wie Acetoprol, Ethiprol, Fipronil, Tebufenpyrad, Tolfenpyrad und Vaniliprol;
- Weiterhin Abamectin, Acequinocyl, Amitraz, Azadirachtin, Bifenazate, Cartap, Chlorfenapyr, Chlordimeform, Cyromazin, Diafenthiuron, Diofenolan, Emamectin, Endosulfan, Fenazaquin, Formetanat, Formetanat-Hydrochlorid, Hydramethylnon, Piperonylbutoxid, Pyridaben, Pymetrozin, Spinosad, Thiamethoxam, Thiocyclam, Pyridalyl, Flonicamid, Fluacypyrim, Milbemectin, Spiromesifen, Flupyrazofos, NC 512, Tolfenpyrad, Flubendiamid, Bistrifluron, Benclothiaz, Pyrafluprol, Pyriprol, Amidoflumet, Flufenerim, Cyflumetofen, Acequinocyl, Lepimectin, Profluthrin, Dimefluthrin, Amidrazon, Metaflumizone, N-Ethyl-2,2-dichlor-1-methylcyclo-propancarboxamid-2-(2,6-dichlor- α,α,α-tri-fluoro-p-tolyl)hydrazon, N-ethyl-2,2-dimethylpropionamid-2-(2,6-dichloro- α,α,α-trifluoro-p-tolyl)-hydrazon, Verbindung der folgenden Formel 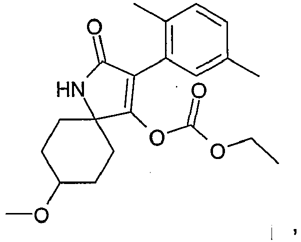 Aminoiso-thiazol der Formel 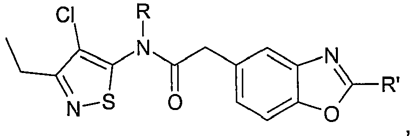 worin
   R = -CH₂OCH₃ oder H und
   R' = -CF₂CF₂CF₃;
   Anthranilamid der Formel 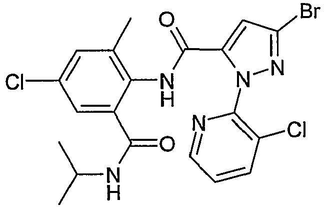 und eine insektizidaktive Verbindung der folgenden Formel

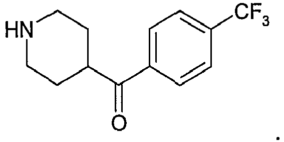

Die folgende Liste von Fungiziden zeigt mögliche Wirkstoffe auf, soll aber nicht auf diese beschränkt sein:
- Acylalanine z.B. Benalaxyl, Furalaxyl, Metalaxyl, Ofurace, Oxadixyl;
- Amin Derivate z.B. Aldimorph, Dodin, Dodemorph, Fenpropimorph, Fenpropidin, Guazatine, Iminoctadin, Spiroxamin, Tridemorph;
- Anilinopyrimidine z.B. Pyrimethanil, Mepanipyrim oder Cyrodinyl;
- Antibiotika z.B. Cycloheximid, Griseofulvin, Kasugamycin, Natamycin, Polyoxin oder Streptomycin, Validamycin A;
- Azole z.B. Bitertanol, Bromuconazol, Cyazofamid, Cyproconazol, Difenoconazol, Dinitroconazol, Epoxiconazol, Etridazol, Fenbuconazol, Fluquiconazol, Flusilazol, Flutriafol, Fuberidazol, Hexaconazol, Hymexazol, Imazalil, Imibenconazol, Metconazol, Myclobutanil, Penconazol, Perfurazoat, Propiconazol, Prochloraz, Prothioconazol, Simeconazol, Tebuconazol, Tetraconazol, Thiabendazol; Triadimefon, Triadimenol, Triflumizol, Triticonazol, 5-Chloro-7-(4-methyl-piperidin-1-yl)-6-(2,4,6-trifluoro-phenyl)-[1,2,4]triazolo[1,5-a]pyrimidin, 2-Butoxy-6-iodo-3-propyl-chromen-4-on, 3-(3-Brom-6-fluor-2-methyl-indol-1-sulfonyl)-[1,2,4]triazol-1-sulfonsäuredimethylamid;
- Dicarboximide z.B. Iprodion, Myclozolin, Procymidon, Vinclozolin;
- Heterocylische Verbindungen z.B. Anilazin, Benomyl, Boscalid, Carbendazim, Carboxin, Oxycarboxin, Cyazofamid, Dazomet, Dithianon, Ethirimol, Dimethirimol, Famoxadon, Fenamidon, Fenarimol, Fuberidazol, Flutolanil, Furametpyr, Isoprothiolan, Mepronil, Nuarimol, Octhilinon, Probenazol, Proquinazid, Pyrifenox, Pyroquilon, Quinoxyfen, Silthiofam, Thiabendazole, Thifluzamid, Thiophanatemethyl, Tiadinil, Tricyclazol, Triforin, 3-[5-(4-Chlor-phenyl)-2,3-dimethyl-isoxazolidin-3-yl]-pyridin, Bupirimat;
- Nitrophenyl Derivative z.B. Binapacryl, Dinocap, Dinobuton, Nitrophthalisopropyl;
- Phenylpyrrole z.B. Fenpiclonil oder Fludioxonil;
- Organische Phosphorverbindungen z.B. Edifenphos, Iprobenfos, Pyrazophos, Tolclofos-methyl, Fosetyl, Fosetyl-Aluminium, phosphorige Säure;
- andere Fungizide z.B. Acibenzolar-S-methyl, Benthiavalicarb, Carpropamid, Chlorothalonil, Cyflufenamid, Cymoxanil, Dazomet, Diclomezin, Diclocymet, Diethofencarb, Ethaboxam, Fenhexamid, Fentin-acetat, Fenoxanil, Ferimzon, Fluazinam, Fosetyl, Fosetyl-aluminum, Iprovalicarb, Hexachlorbenzol, Metrafenon, Pencycuron, Propamocarb, Phthalide, Toloclofos-methyl, Quintozen, Zoxamid, Isoprothiolan, Probenfos, Fluopicolid (Picobenzamid), Carpropamid, Mandipropamid, N-(2-{4-[3-(4-Chlor-phenyl)-prop-2-ynyloxy]-3-methoxy-phenyl}-ethyl)-2-methansulfonylamino-3-methyl-butyramid, N-(2-{4-[3-(4-Chlor-phenyl)-prop-2-ynyloxy]-3-methoxy-phenyl}-ethyl)-2-ethansulfonylamino-3-methyl-butyramid; Furametpyr, Thifluzamid, Penthiopyrad, Fenhexamid, 3,4-Dichlor-isothiazol-5-carbonsäure(2-cyan-phenyl)-amid, Flubenthiavalicarb, 3-(4-Chlor-phenyl)-3-(2-isopropoxycarbonylamino-3-methyl-butyrylamino)-propionsäure-methylester, {2-Chlor-5-[1-(6-methyl-pyridin-2-ylmethoxyimino)-ethyl]-benzyl}-carbaminsäure-methylester, {2-Chlor-5-[1-(3-methyl-benzyloxyimino)-ethyl]-benzyl}-carbaminsäure-methylester, Flusulfamid,
   Amide der Formel 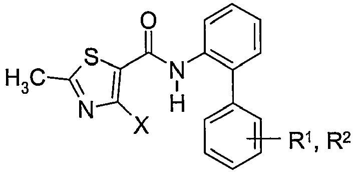 worin
   X für CHF₂ oder CH₃ und
   R¹ und R² unabhängig voneinander für Halogen, Methyl oder Halomethyl stehen;
- Strobilurine z.B. Azoxystrobin, Dimoxystrobin, Enestroburin, Fluoxastrobin, Kresoxim-methyl, Metominostrobin, Orysastrobin, Picoxystrobin, Pyraclostrobin oder Trifloxystrobin;
- Sulfensäure Derivate z.B. Captafol, Captan, Dichlofluanid, Folpet, Tolylfluanid;
- Zimtsäureamide und Analoga z.B. Dimethomorph, Flumetover or Flumorph, Amid Fungizide z.B. Cyclofenamid oder (Z)-N-[*α*-(cyclopropylmethoxyimino)-2,3-difluor-6-(difluormethoxy)benzyl]-2-phenylacetamid;

Die folgende Liste von Herbiziden zeigt mögliche Wirkstoffe auf, soll aber nicht auf diese beschränkt sein:
Verbindungen, die die Biosynthese von Lipiden inhibieren, z.B. Chlorazifop, Clodinafop, Clofop, Cyhalofop, Ciclofop, Fenoxaprop, Fenoxaprop-p, Fenthiaprop, Fluazifop, Fluazifop-P, Haloxyfop, Haloxyfop-P, Isoxapyrifop, Metamifop, Propaquizafop, Quizalofop, Quizalofop-P, Trifop, Alloxydim, Butroxydim, Clethodim, Cloproxydim, Cycloxydim, Profoxydim, Sethoxydim, Tepraloxydim, Tralkoxydim, Butylat, Cycloat, Diallat, Dimepiperat, EPTC, Esprocarb, Ethiolat, Isopolinat, Methiobencarb, Molinat, Orbencarb, Pebulat, Prosulfocarb, Sulfallat, Thiobencarb, Thiocarbazil, Triallat, Vernolat, Benfuresat, Ethofumesat und Bensulid;

ALS-Inhibitoren wie Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, Imazosulfuron, lodosulfuron, Mesosulfuron, Metsulfuron, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, Imazamethabenz, Imazamox, Imazapic, Imazapyr, Imazaquin, Imazethapyr, Cloransulam, Diclosulam, Florasulam, Flumetsulam, Metosulam, Penoxsulam, Bispyribac, Pyriminobac, Propoxycarbazon, Flucarbazon, Pyribenzoxim, Pyriftalid und Pyrithiobac;

Verbindungen, die die Photosynthese inhibieren wie Atraton, Atrazin, Ametryn, A-ziprotryn, Cyanazin, Cyanatryn, Chlorazin, Cyprazin, Desmetryn, Dimethametryn, Dipropetryn, Eglinazin, Ipazin, Mesoprazin, Methometon, Methoprotryn, Procyazin, Proglinazin, Prometon, Prometryn, Propazin, Sebuthylazin, Secbumeton, Simazin, Simeton, Simetryn, Terbumeton, Terbuthylazin und Terbutryn;

Protoporphyrinogen-IX Oxidase-Inhibitoren wie Acifluorfen, Bifenox, Chlormethoxyfen, Chlornitrofen, Ethoxyfen, Fluorodifen, Fluoroglycofen, Fluoronitrofen, Fomesafen, Furyloxyfen, Halosafen, Lactofen, Nitrofen, Nitrofluorfen, Oxyfluorfen, Fluazolat, Pyraflufen, Cinidon-ethyl, Flumiclorac, Flumioxazin, Flumipropyn, Fluthiacet, Thidiazimin, Oxadiazon, Oxadiargyl, Azafenidin, Carfentrazon, Sulfentrazon, Pentoxazon, Benzfendizon, Butafenacil, Pyraclonil, Profluazol, Flufenpyr, Flupropacil, Nipyraclofen und Etnipromid;

Herbizide wie Metflurazon, Norflurazon, Flufenican, Diflufenican, Picolinafen, Beflubutamid, Fluridon, Flurochloridon, Flurtamon, Mesotrion, Sulcotrion, Isoxachlortol, Isoxaflutol, Benzofenap, Pyrazolynat, Pyrazoxyfen, Benzobicyclon, Amitrol, Clomazon, Aclonifen, 4-(3-Trifluormethylphenoxy)- 2-(4-trifluormethylphenyl)pyrimidin und 4-heterocyclyl-substituierte Benzoylderivate der Formel (vgl. WO-A-96/26202, WO-A-97/41116, WO-A-97/41117 und WO-A-97/41118) 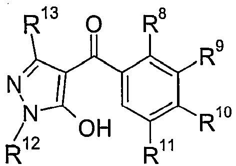 worin die Substituenten R⁸ bis R¹³ folgende Bedeutung haben:
- R⁸, R¹⁰: Wasserstoff, Halogen, C₁-C₆-Alkyl, C₁-C₆-Haloalkyl, C₁-C₆-Alkoxy, C₁-C₆-Haloalkoxy, C₁-C₆-Alkylthio, C₁-C₆-Alkylsulfinyl oder C₁-C₆-Alkylsulfonyl;
- R⁹: bedeutet ein heterocyclisches Radikal aus der Gruppe bestehend aus Thiazol-2-yl, Thiazol-4-yl, Thiazol-5-yl, Isoxazol-3-yl, Isoxazol-4-yl, Isoxazol-5-yl, 4,5-dihydroisoxazol-3-yl, 4,5-Dihydroisoxazol-4-yl und 4,5-Dihydroisoxazol-5-yl, worin die genannten Radikale einen oder mehrere Substituenten tragen können z.B. mono-, di-, tri- or tetrasubstituiert sein können durch Halogen, C₁-C₄-Alkyl, C₁-C₄-Alkoxy, C₁-C₄-Haloalkyl, C₁-C₄-Haloalkoxy oder C₁-C₄-Alkylthio;
- R¹¹: = Wasserstoff, Halogen oder C₁-C₆-Alkyl;
- R¹²: = C₁-C₆-Alkyl;
- R¹³: = Wasserstoff oder C₁-C₆-Alkyl.

Weitere geeignete Herbizide sind EPSP-Synthase-Inhibitoren wie Glyphosat;
Glutamin-Synthase-Inhibitoren wie Glufosinat und Bilanaphos;
DHP-Synthase-Inhibitoren wie Asulam;
Mitose-Inhibitoren wie Benfluralin, Butralin, Dinitramin, Ethalfluralin, Fluchloralin, i-Sopropalin, Methalpropalin, Nitralin, Oryzalin, Pendimethalin, Prodiamin, Profluralin, Trifluralin, Amiprofos-methyl, Butamifos, Dithiopyr, Thiazopyr, Propyzamid, Tebutam, Chlorthal, Carbetamid, Chlorbufam, Chlorpropham and Propham;
VLCFA-Inhibitoren wie Acetochlor, Alachlor, Butachlor, Butenachlor, Delachlor, Diethatyl, Dimethachlor, Dimethenamid, Dimethenamid-P, Metazachlor, Metolachlor, S-Metolachlor, Pretilachlor, Propachlor, Propisochlor, Prynachlor, Terbuchlor, Thenylchlor, Xylachlor, Allidochlor, CDEA, Epronaz, Diphenamid, Napropamide, Naproanilide, Pethoxamid, Flufenacet, Mefenacet, Fentrazamid, Anilofos, Piperophos, Cafenstrol, Indanofan und Tridiphan;
Inhibitoren für die Biosynthese von Cellulose wie Dichlobenil, Chlorthiamid, Isoxaben und Flupoxam;
Herbizide wie Dinofenat, Dinoprop, Dinosam, Dinoseb, Dinoterb, DNOC, Etinofen und Medinoterb;
Auxin-Herbizide wie Clomeprop, 2,4-D, 2,4,5-T, MCPA, MCPA Thioethyl, Dichlorprop, Dichlorprop-P, Mecoprop, Mecoprop-P, 2,4-DB, MCPB, Chloramben, Dicamba, 2,3,6-TBA, Tricamba, Quinclorac, Quinmerac, Clopyralid, Fluroxypyr, Picloram, Triclopyr und Benazolin;
Auxin-Transport-Inhibitoren wie Naptalam, Diflufenzopyr;
außerdem: Benzoylprop, Flamprop, Flamprop-M, Brombutid, Chlorflurenol, Cinmethylin, Methyldymron, Etobenzanid, Fosamin, Metam, Pyributicarb, Oxaziclomefon, Dazomet, Triaziflam und Methylbromid.

Der Begriff "Safener" hat die folgende Bedeutung: Es ist bekannt, dass in einigen Fällen bessere Herbizidverträglichkeit durch die gemeinsame Applikation spezifisch wirkender Herbizide mit organischen aktiven Verbindungen erreicht werden kann, welche selber herbizid wirken können. In diesen Fällen wirken diese Verbindungen als Antidot oder Antagonist und werden aufgrund der Tatsache, dass sie Schaden an Nutzpflanzen reduzieren bzw. verhindern als "Safener" bezeichnet.

Die folgende Liste zeigt mögliche Safener auf, soll aber nicht auf diese beschränkt sein:
Benoxacor, Cloquintocet, Cyometrinil, Dichlormid, Dicyclonon, Dietholat, Fenchlorazol, Fenclorim, Flurazol, Fluxofenim, Urilazol, Isoxadifen, Mefenpyr, Mephenat, Naphthalsäureanhydrid, 2,2,5-Trimethyl-3-(dichloracetyl)-1,3-oxazolidin (R-29148), 4-(Dichloracetyl)-1-oxa-4-azaspiro[4.5]decan (AD-67; MON 4660) und Oxabetrinil.

Die folgende Liste von Verbindungen mit wachstumsregulatorischer Wirkung zeigt mögliche Wirkstoffe auf, soll aber nicht auf diese beschränkt sein:
1-Naphthylacetamid, 1-Naphthylessigsäure, 2-Naphthyloxyessigsäure, 3-CPA, 4-CPA, Ancymidol, Anthrachinon, BAP, Butifos, Tribufos, Butralin, Chlorflurenol, Chlormequat, Clofencet, Cyclanilid, Daminozid, Dicamba, Dikegulac Natrium, Dimethipin, Chlorfenethol, Etacelasil, Ethephon, Ethychlozat, Fenoprop, 2,4,5-TP, Fluoridamid, Flurprimidol, Flutriafol, Gibberillinsäure, Gibberillin, Guazatin, Imazalil, Indolylbuttersäure, Indolylessigsäure, Karetazan, Kinetin, Lactidichlor-ethyl, Maleinsäurehydrazid, Mefluidid, Mepiquat-chlorid, Naptalam, Paclobutrazol, Prohexadion Calcium, Quinmerac, Sintofen, Tetcyclacis, Thidiazuron, Trijod-Benzoesäure, Triapenthenol, Triazethan, Tribufos, Trinexapacethyl, Uniconazol.

Die Mini-Emulsionspolymerisation von ethylenisch ungesättigten Monomeren in Gegenwart von öllöslichen Farbstoffen ist beispielsweise aus der zum Stand der Technik zitierten WO-A-99/40123 bekannt. Wegen der Einzelheiten dieser Polymerisationsmethode und der Monomeren wird insbesondere auf Seite 3, Zeile 30 bis Seite 38, Zeile 6 und auf Seite 69, Zeile 11 bis Seite 84, Zeile 43 der WO-A-99/40123 hingewiesen. Dieser Teil der WO-Anmeldung wird hiermit durch Bezugnahme zum Offenbarungsgehalt der vorliegenden Erfindung gemacht. Die dort beschriebenen ethylenisch ungesättigten Monomeren, Hilfsstoffe und Verfahrensmaßnahmen zur Herstellung der Miniemulsion werden in gleicher Weise bei dem erfindungsgemäßen Verfahren mit der Ausnahme angewendet, dass erfindungsgemäß Wirkstoffe eingesetzt werden, die üblicherweise zur Regulation des Wachstums von Pflanzen oder zur Bekämpfung unerwünschten Pflanzenwuchses oder zur Bekämpfung von unerwünschtem Insekten- oder Milbenbefall auf Pflanzen oder zur Bekämpfung von phytopathogenen Pilzen und/oder zur Behandlung von Saatgut zum Schutz vor Befall und Schädigung durch Mikroorganismen verwendet werden.

Die Ölphase der Miniemulsion enthält beispielsweise 0,5 bis 60 Gew.-%, vorzugsweise 10 bis 40 Gew.-%, insbesondere 10 bis 30 Gew.-%, bezogen auf die insgesamt eingesetzten Monomeren, mindestens eines Wirkstoffs.

Als ethylenisch ungesättigte Monomere kommen beispielsweise
(a) 50 bis 100 Gew.-% mindestens eines ethylenisch ungesättigten Monomeren A mit einer Wasserlöslichkeit von > 0,01 g/l bei 25°C und 1013 mbar,
(b) 0 bis 50 Gew.-% mindestens eines ethylenisch ungesättigten Monomeren B mit einer Wasserlöslichkeit von < 0,01 g/l bei 25°C und 1013 mbar und
(c) 0 bis 30 Gew.-% mindestens eines ethylenisch ungesättigten Monomeren C mit wenigstens zwei Doppelbindungen

in Betracht. Diese Monomeren oder Kombinationen von Monomeren sind ausführlich in der obengenannten WO-A-99/40123 beschrieben. Lediglich beispielhaft sollen einzelne Monomere der Gruppen (a) bis (c) genannt werden, und zwar als Monomere der Gruppe (a) Styrol, *α*-Methylstyrol, Vinylacetat, Vinylpropionat, Maleinsäuredimethylester, Maleinsäurediethylester, Ester aus ethylenisch ungesättigten C₃- bis C₅-Carbonsäuren und einwertigen Alkoholen mit 1 bis 6 C-Atomen und Allylacetat.

Die Monomeren (a) umfassen auch solche Monomere A', die eine erhöhte Wasserlöslichkeit aufweisen, d.h. > 60 g/l bei 25°C und 1013 mbar. Die Monomeren A' werden zur Modifizierung der Polymeren eingesetzt und sind meistens in Mengen von 0,1 bis zu 20 Gew.-%, vorzugsweise von 0,5 bis 10 Gew.-% am Aufbau der Polymermatrix beteiligt. Beispiele für diese Monomeren sind Acrylsäure, Methacrylsäure, Styrolsulfonsäure, 2-Acrylamido-2-methylpropansulfonsäure und Vinylphosphonsäure sowie kationisierbare Monomere wie Dimethylaminoethylacrylat, Dimethylaminopropylmethacrylamid, Dimethylaminopropylacrylamid oder 1-Vinylimidazol sowie N-Vinylformamid, Acrylnitril, Methacrylnitril, Acrylamid, Methacrylamid und N-Vinylpyrrolidon. Die basischen Monomeren werden in Form der freien Basen, als Salz oder in quaternierter Form bei der Polymerisation eingesetzt. Die Säuregruppen aufweisenden Monomeren können in Form der freien Säuren oder in teilweise oder vollständig mit Alkalimetallbasen oder Ammoniumbasen neutralisierter Form bei der Polymerisation verwendet werden.

Als Monomere der Gruppe (b) eignen sich beispielsweise 2- und 4-Methylstyrol, p-tert.-Butylstyrol, Ester aus ethylenisch ungesättigten C₃- bis C₅-Carbonsäuren und Alkoholen mit mehr als 12 C-Atomen im Molekül, Vinyllaurat, Vinylstearat sowie Makromonomere wie Oligopropenacrylat.

Beispiele für Monomere der Gruppe (c) sind Glykoldiacrylat, Allylacrylat, Allylmethacrylat, Trimethylolpropantriacrylat, Trimethylolpropantrimethacrylat, Pentaerythrittriacrylat, Pentaerythrittetraacrylat, Butandioldiacrylat, Divinylbenzol, Divinylharnstoff und Methylenbisacrylamid.

So kann zur Herstellung der Polymermatrix der dispergierten Polymerteilchen beispielsweise eine Kombination aus
(a) Methylmethacrylat, Styrol, Vinylacetat, Methylacrylat, Ethylacrylat, Ethylmethacrylat, n-Butylacrylat, Isobutylacrylat, tert.-Butylacrylat, Acrylsäure, Methacrylsäure, Acrylamid, Methacrylamid, Acrylnitril und/oder Methacrylnitril,
(b) gegebenenfalls Laurylacrylat, Palmitylacrylat und/oder Stearylacrylat und
(c) gegebenenfalls Butandioldiacrylat, Allylacrylat, Allylmethacrylat, Divinylbenzol, Trimethylolpropantriacrylat, Pentaerythrittriacrylat und/oder Pentaerythrittetraacrylat
eingesetzt werden. Bei dem erfindungsgemäßen Verfahren wird vorzugsweise mindestens ein Monomer aus den Gruppen (a), (b) und (c) eingesetzt. Eine weitere bevorzugt in Betracht kommende Monomerkombination zur Herstellung der Polymermatrix besteht aus einer Kombination aus
(a) Methylmethacrylat, Ethylmethacrylat und/oder Acrylsäure,
   und
(c) Butandioldiacrylat, Pentaerythrittetraacrylat, Pentaerythrittriacrylat, Trimethy lolpropantriacrylat, Allylmethacrylat und/oder Allylacrylat.

Nach dem erfindungsgemäßen Verfahren erhält man mindestens einen Wirkstoff enthaltende, wässrige Polymerdispersionen mit einem mittleren Teilchendurchmesser der dispergierten Polymerteilchen von < 1000 nm durch Miniemulsionspolymerisation von ethylenisch ungesättigten Monomeren. Hierbei geht man vorzugsweise so vor, dass man zunächst mindestens einen Wirkstoff in mindestens einem Monomer löst. Die Wirkstoffe sind in den meisten Fällen monomolekular gelöst, können jedoch auch kolloiddispers gelöst vorliegen. Die Wirkstoffe enthaltenden Monomerlösungen werden dann in Wasser in Gegenwart mindestens eines oberflächenaktiven Mittels emulgiert. Anstelle oder zusätzlich zu einem oberflächenaktiven Mittel können auch in Wasser und/oder den Monomeren unlösliche Mikropartikel oder Nanopartikel als Stabilisatoren für die Emulsion verwendet werden (Pickering-Effekt). Stabilisatoren dieser Art sind z.B. nanoscaliges Siliciumdioxid, Aluminiumoxid und Magnesiumsulfat. Man erhält eine Miniemulsion mit einer mittleren Tröpfchengröße der emulgierten Tröpfchen von < 500 nm.

Das Emulgieren geschieht nach Methoden, die in der WO-A-99/40123, Seite 26, Zeile 11 bis Seite 32, Zeile 4 ausführlich beschrieben sind. Beispielsweise verwendet man zum Emulgieren Hochdruckhomogenisatoren unterschiedlicher Bauart oder man lässt Ultraschall auf eine Makroemulsion einwirken, die als wesentliche Bestandteile mindestens einen Wirkstoff, der vorzugsweise in mindestens einem Monomeren gelöst ist, und Wasser enthält, vgl. EP-A-0 765 896, EP-A-1 008 380. In den meisten Fällen emulgiert man die Mischung in Gegenwart eines oberflächenaktiven Mittels. Es ist jedoch auch möglich, die Wirkstoffe zur Miniemulsion oder sie während der Bereitung der Miniemulsion zuzusetzen. Vorzugsweise werden sie jedoch, wie oben beschrieben, zunächst in mindestens einem Monomer gelöst und in gelöster oder kolloiddispers gelöster Form in Wasser emulgiert.

Die wässrige Phase, die zur Herstellung der Miniemulsionen eingesetzt wird, besteht aus Wasser und enthält gegebenenfalls ein oberflächenaktives Mittel, das die bei der Emulsion der organischen Phase in der wässrigen Phase gebildeten feinteiligen Monomertröpfchen stabilisiert. Das oberflächenaktive Mittel wird beispielsweise in Mengen bis zu 15 Gew.-%, beispielsweise von 0,05 bis 15 Gew.-%, vorzugsweise von 0,05 bis 5 Gew.-% und insbesondere von 0,1 bis 2 Gew.-%, jeweils bezogen auf die gesamte Dispersion, eingesetzt. Man findet es entweder in der wässrigen Phase, der organischen Phase oder in beiden Phasen. Es wird vorzugsweise vor dem Emulgieren zur wäßrigen Phase zugegeben. Man kann prinzipiell alle oberflächenaktiven Mittel verwenden. Bevorzugt eingesetzte oberflächenaktive Mittel sind anionische Verbindungen sowie amphiphile Copolymerisate mit einer mittleren Molmasse M_{w} von 100 bis 100000. Beispiele für geeignete oberflächenaktive Mittel sind Natriumlaurylsulfat, Natriumdodecylsulfat, Natriumhexadecylsulfat, Natriumdioctylsulfosuccinat und/oder Additionsprodukte von 15 bis 50 Mol Ethylenoxid und/oder Propylenoxid an 1 Mol eines C₁₂- bis C₂₂-Alkohols.

Die Miniemulsion kann zusätzlich auch mit Hilfe von amphiphilen Polymeren stabilisiert werden, die gegebenenfalls eingesetzt werden. Sofern man amphiphile Polymere verwendet, setzt man sie in Mengen von beispielsweise 0,05 bis 15 Gew.-%, vorzugsweise 0,5 bis 5 Gew.-%, bezogen auf die bei der Polymerisation eingesetzten Monomeren ein. Beispiele für amphiphile Polymere sind Copolymerisate, die Einheiten von
(a) hydrophoben monoethylenisch ungesättigten Monomeren und
(b) monoethylenisch ungesättigten Carbonsäuren, monoethylenisch ungesättigten Sulfonsäuren, monoethylenisch ungesättigten Phosphonsäuren oder deren Mischungen und/oder basischen Monomeren
enthalten.

Geeignete hydrophobe monoethylenisch ungesättigte Monomere
(a) sind beispielsweise Styrol, Methylstyrol, Ethylstyrol, Acrylnitril, Methacrylnitril, C₂-bis C₁₈-Olefine, Ester aus monoethylenisch ungesättigten C₃- bis C₅-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.
   Die amphiphilen Copolymerisate enthalten als hydrophile Monomere
(b) vorzugsweise Acrylsäure, Methacrylsäure, Maleinsäure, Maleinsäureanhydrid, Itaconsäure, Vinylsulfonsäure, 2-Acrylamidomethylpropansulfonsäure, Acrylami-do-propan-3-sulfonsäure, 3-Sulfopropylacrylat, 3-Sulfopropylmethacrylat, Styrolsulfonsäure, Vinylphosphonsäure oder deren Mischungen in einpolymerisierter Form. Die sauren Monomeren können in Form der freien Säuren oder in partiell oder vollständig neutralisierter Form vorliegen.

Weitere geeignete hydrophile Monomere sind basische Monomere. Sie können mit den hydrophoben Monomeren (a) allein oder auch in Mischung mit vorstehend genannten den sauren Monomeren polymerisiert werden. Wenn man Mischungen aus basischen und sauren Monomeren einsetzt, entstehen amphotere Copolymerisate, die je nach Molverhältnis der jeweils einpolymerisierten sauren zu basischen Monomeren anionisch oder kationisch geladen sind.

Basische Monomere sind beispielsweise Di-C₁-bis C₂-alkylamino-C₂-bis C₄-alkyl(meth)acrylate oder Diallyldimethylammoniumchlorid. Die basischen Monomeren können in Form der freien Basen, der Salze mit organischen oder anorganischen Säuren oder in der mit Alkylhalogeniden quaternierten Form vorliegen. Die Salzbildung bzw. die Quaternierung, bei der die basischen Monomeren kationisch werden, kann teilweise oder vollständig erfolgt sein. Beispiele für solche Verbindungen sind Dimethylaminoethylmethacrylat, Diethylaminoethylmethacrylat, Dimethylaminoethylacrylat, Diethylaminoethylacrylyat, Dimethylaminopropylmethacrylat, Dimethylaminopropylacrylat, Diethylaminopropylmethacrylat, Diethylaminopropylacrylat und/oder Dimethylaminoethylacrylamid, Dimethylaminoethylmethacrylamid, Dimethylaminopropylacrylamid, Dimethylaminopropylmethacrylamid und/oder Diallyldimethylammoniumchlorid.

Sofern die amphiphilen Copolymerisate in Form der freien Säure nicht ausreichend wasserlöslich sind, werden sie in Form von wasserlöslichen Salzen eingesetzt, z.B. verwendet man die entsprechenden Alkalimetall-, Erdalkalimetall- und Ammoniumsalze. Diese Salze werden beispielsweise durch partielle oder vollständige Neutralisation der freien Säuregruppen der amphiphilen Copolymerisate mit Basen hergestellt, z.B. verwendet man zur Neutralisation Natronlauge, Kalilauge, Magnesiumoxid, Ammoniak oder Amine wie Triethanolamin, Ethanolamin, Morpholin, Triethylamin oder Butylamin. Vorzugsweise werden die Säuregruppen der amphiphilen Copolymerisate mit Ammoniak oder Natronlauge neutralisiert. Die Wasserlöslichkeit von basischen Monomeren bzw. von Copolymerisaten, die solche Monomere einpolymerisiert enthalten, kann dagegen durch partielle oder vollständige Neutralisation mit einer Mineralsäure wie Salzsäure oder Schwefelsäure oder durch Zusatz einer organischen Säure wie Essigsäure oder p-Toluolsulfonsäure, erhöht werden. Die Molmasse der amphiphilen Copolymerisate beträgt beispielsweise 1000 bis 100 000 und liegt vorzugsweise in dem Bereich von 1500 bis 10 000. Die Säurezahlen der amphiphilen Copolymerisate betragen beispielsweise 50 bis 500, vorzugsweise 150 bis 350 mg KOH/g Polymer.

Besonders bevorzugt sind solche amphiphilen Copolymerisate, die
(a) 95 bis 45 Gew.-% Isobuten, Diisobuten, Styrol oder deren Mischungen und
(b) 5 bis 55 Gew.-% Acrylsäure, Methacrylsäure, Maleinsäure, Halbester von Maleinsäure oder deren Mischungen
einpolymerisiert enthalten. Besonders bevorzugt werden Copolymerisate als Stabilisator für die Miniemulsion eingesetzt, die
(a) 45 bis 80 Gew.-% Styrol,
(b) 55 bis 20 Gew.-% Acrylsäure und gegebenenfalls
(c) zusätzlich weitere Monomere
einpolymerisiert enthalten. Die Copolymerisate können gegebenenfalls als weitere Monomere (c) Einheiten von Maleinsäurehalbestern einpolymerisiert enthalten. Solche Copolymerisate sind beispielsweise dadurch erhältlich, daß man Copolymerisate aus Styrol, Diisobuten oder Isobuten oder deren Mischungen mit Maleinsäureanhydrid in Abwesenheit von Wasser copolymerisiert und die Copolymerisate im Anschluß an die Polymerisation mit Alkoholen umsetzt, wobei man pro Mol Anhydridgruppen im Copolymerisat 5 bis 50 Mol-% eines einwertigen Alkohols einsetzt. Geeignete Alkohole sind beispielsweise Methanol, Ethanol, n-Propanol, Isopropanol, n-Butanol, Isobutanol und tert.-Butanol. Man kann jedoch auch die Anhydridgruppen der Copolymerisate mit mehrwertigen Alkoholen wie Glykol oder Glycerin umsetzen. Hierbei wird die Reaktion jedoch nur soweit geführt, daß nur eine OH-Gruppe des mehrwertigen Alkohols mit der Anhydridgruppe reagiert. Sofern die Anhydridgruppen der Copolymerisate nicht vollständig mit Alkoholen umgesetzt werden, erfolgt die Ringöffnung der nicht mit Alkoholen umgesetzten Anhydridgruppen durch Zugabe von Wasser.

Andere als Stabilisator für Miniemulsionen geeignete Verbindungen sind beispielsweise handelsübliche Polymerisate von monoethylenisch ungesättigten Säuren sowie Pfropfpolymerisate von N-Vinylformamid auf Polyalkylenglykolen, die beispielsweise in der WO-A-96/34903 beschrieben werden. Die aufgepfropften Vinylformamideinheiten können gegebenenfalls bis zu 10 % hydrolysiert sein. Der Anteil an aufgepfropften Vinylformamideinheiten beträgt vorzugsweise 20 bis 40 Gew.-%, bezogen auf Polyalkylenglykol. Vorzugsweise verwendet man Polyethylenglykole mit Molmassen von 2000 bis 10 000.

Außerdem kommen zur Stabilisierung von Miniemulsionen zwitterionische Polyalkylenpolyamine und zwitterionische Polyethylenimine in Betracht. Solche Verbindungen sind beispielsweise aus der EP-B-0112592 bekannt. Sie sind beispielsweise dadurch erhältlich, daß man ein Polyalkylenpolyamin oder Polyethylenimin zunächst alkoxyliert, z.B. mit Ethylenoxid, Propylenoxid und/oder Butylenoxid und die Alkoxylierungsprodukte anschließend quaternisiert, z.B. mit Methylbromid oder Dimethylsulfat und die quaternierten, alkoxylierten Produkte dann mit Chlorsulfonsäure oder Schwefeltrioxid sulfatiert. Die Molmasse der zwitterionischen Polyalkylenpolyamine beträgt beispielsweise 1000 bis 9000 vorzugsweise 1500 bis 7500. Die zwitterionischen Polyethylenimine haben vorzugsweise Molmassen in dem Bereich von 1500 bis 7500 Dalton. Die anderen, oben genannten Stabilisatoren werden gegebenenfalls außer einem oberflächenaktiven Mittel zur Stabilisierung der Miniemulsion angewendet. Falls sie eingesetzt werden, verwendet man sie beispielsweise in Mengen von 0,05 bis 15 Gew.-%, vorzugsweise 0,5 bis 5 Gew.-%, bezogen auf die Monomeren.

Um eine Miniemulsion zu stabilisieren, verwendet man bei der Herstellung dieser Emulsionen gegebenenfalls zusätzlich eine nichtpolymerisierbare hydrophobe Verbindung, z.B. einen Kohlenwasserstoff (z.B. einen aliphatischen oder aromatischen Kohlenwasserstoff (z. B. Hexadekan), einen Alkohol mit 10 bis 24 C-Atomen, hydrophobe Polymere mit Molmassen Mw <100 000, Tetraalkylsilane und/oder Mischungen der genannten Verbindungen. Beispiele für solche Stabilisatoren sind Hexadecan, Dekahydronaphthalin, Olivenöl, Polystyrol mit einer mittleren Molmasse M_{w} von 500 bis 50 000, Siloxane mit einer Molmasse M_{w} von 500 bis 5000, Poly-n-butylacrylat wie Acronal® A 150 F oder PnBa (ein Hochdrucktemperaturlösungspolymerisat des n- Butylacrylats (120 °C in Isopropanol) mit einem bei 25°C in Isopropanol bestimmten K-Wert von 24), Homopolymerisate aus Ethylen, Propylen, Buten-1, Buten-2, Penten-1 oder Hexen-1 mit einer mittleren Molmasse M_{w} von 100 bis 10 000, Copolymerisate mit einer mittleren Molmasse von 100 bis 10 000 aus mindestens zwei der vorstehend genannten Olefine und/oder Polyisobutylen mit einer mittleren Molmasse M_{w} von mindestens 100, insbesondere von 400 bis 10 000, Cetylalkohol, Stearylalkohol, Palmitylalkohol und/oder Behenylalkohol. Weitere mögliche hydrophoben, nichtpolymerisierbare Verbindungen sind Filmbildehilfsmittel oder Weichmacher wie Plastilit® 3060 der BASF (ein technisches Gemisch der Di-n-butylester von C₄-C₆-Dicarbonsäuren) ferner Harze wie Kollophoniumharze (vgl. Ullmanns Encycl. Techn. Chem., 4. Auflage (1976), Vol. 12, S. 525 - 538) und Kohlenwasserstoffharze (vgl. Encycl. Polym. Sci. Eng. (1987) Vol. 7, S. 758 - 782), wie z. B. Kristalex F 85 der Fa. Hercules. Beispielhaft genannt sei Foral® 85 E, ein Glycerinester von hochhydriertem Kollophoniumharz (Erweichungspunkt: 86 °C) der Fa. Hercules. Die hydrophoben, nichtpolymerisierbaren Verbindungen werden wahlweise verwendet. Sie haben eine Wasserlöslichkeit von < 0,1 g/l bei 25°C und 1 bar. Sofern man sie einsetzt, verwendet man sie in Mengen von 1 bis 10, vorzugsweise 2 bis 6 Gew.-%, bezogen auf die bei der Polymerisation eingesetzten Monomeren.

Der K-Wert ist eine relative Viskositätszahl, die in Analogie zur DIN 53726 bestimmt wird. Er beinhaltet die Fließgeschwindigkeit des reinen Lösungsmittels relativ zur Fließgeschwindigkeit der 0,1 gew.-%igen Lösung des Polymerisats im selben Lösungsmittel (vgl. auch Cellulosechemie, Vol. 13 (1932), S. 58 - 64, und Kirk-Othmer Encyclopedia of Chemical Technology, Vol. 23, S. 967 - 968). Der K-Wert ist ein Maß für das mittlere Molekulargewicht eines Polymerisats. Ein hoher K-Wert entspricht dabei einem hohen mittleren Molekulargewicht.

Um stabile wässrige Polymerdispersionen zu erhalten, kann man die Polymerisation gegebenenfalls noch zusätzlich in Gegenwart von Schutzkolloiden durchführen. Sie haben in der Regel mittlere Molmassen M_{w} von oberhalb 500, vorzugsweise von mehr als 1000. Beispiele für Schutzkolloide sind Polyvinylalkohole, Cellulosederivate wie Carboxymethylcellulose, Polyvinylpyrrolidon, Polyethylenglykole, Pfropfpolymerisate von Vinylacetat und/oder Vinylpropionat auf Polyethylenglykolen, ein- oder beidseitig mit Alkyl-, Carboxyl- oder Aminogruppen endgruppenverschlossene Polyethylenglykole, Polydiallyldimethylammoniumchloride und/oder Polysaccharide wie insbesondere wasserlösliche Stärken, Stärkederivate und Proteine. Solche Produkte werden beispielsweise beschrieben in Römpp, Chemie Lexikon 9. Auflage, Band 5, Seite 3569 oder in Houben-Weyl, Methoden der organischen Chemie, 4. Auflage, Band 14/2 Kapitel IV Umwandlung von Cellulose und Stärke von E. Husemann und R. Werner, Seiten 862 - 915 und in Ullmanns Encyclopedia for Industrial Chemistry, 6. Auflage, Band 28, Seiten 533 ff unter Polysaccharides.

Geeignet sind beispielsweise alle Arten von Stärke, z.B. sowohl Amylose als auch Amylopektin, native Stärken, hydrophob oder hydrophil modifizierte Stärken, anionische Stärken, kationisch modifizierte Stärken, abgebaute Stärken, wobei der Stärkeabbau beispielsweise oxidativ, thermisch, hydrolytisch oder enzymatisch vorgenommen werden kann und wobei für den Stärkeabbau sowohl native als auch modifizierte Stärken eingesetzt werden können. Weitere geeignete Schutzkolloide sind Dextrine und vernetzte wasserlösliche Stärken, die wasserquellbar sind.

Vorzugsweise setzt man als Schutzkolloid native, wasserlösliche Stärken ein, die beispielsweise mit Hilfe eines Stärkeaufschlusses in eine wasserlösliche Form überführt werden können, sowie anionisch modifizierte Stärken wie oxidierte Kartoffelstärke. Besonders bevorzugt werden anionisch modifizierte Stärken, die einem Molekulargewichtsabbau unterworfen wurden. Der Molekulargewichtsabbau wird vorzugsweise enzymatisch durchgeführt. Die mittlere Molmasse M_{w} der abgebauten Stärken beträgt beispielsweise 500 bis 100 000, vorzugsweise 1000 bis 30 000. Die abgebauten Stärken haben beispielsweise eine intrinsische Viskosität [*η*] von 0,04 bis 0,5 dl/g. Solche Stärken werden beispielsweise in der EP-B-0 257 412 und in der EP-B-0 276 770 beschrieben. Falls bei der Polymerisation Schutzkolloide eingesetzt werden, betragen die angewendeten Mengen beispielsweise 0,5 bis 50, insbesondere 5 bis 40 Gew.-%, meistens 10 bis 30 Gew.-%, bezogen auf die bei der Polymerisation eingesetzten Monomeren.

Um die Eigenschaften der Polymeren zu modifizieren, kann man die Polymerisation gegebenenfalls in Gegenwart mindestens eines Polymerisationsreglers durchführen. Beispiele für Polymerisationsregler sind organische Verbindungen, die Schwefel in gebundener Form enthalten wie Dodecylmercaptan, Thiodiglykol, Ethylthioethanol, Din-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff, Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren. Polymerisationsregler und Vernetzer können bei der Polymerisation unabhängig voneinander oder gemeinsam eingesetzt werden. Damit kann man beispielsweise die Rheologie der entstehenden Polymerdispersionen steuern.

Die Miniemulsion wird radikalisch polymerisiert. Die Polymerisation erfolgt meistens in Gegenwart mindestens eines radikalischen Polymerisationsinitiators. Als Polymerisationsinitiator kommen sämtliche Verbindungen in Betracht, die eine Polymerisation auslösen können. Im Wesentlichen handelt es sich hierbei um Peroxide, Hydroperoxide, Azoverbindungen und Redoxkatalysatoren. Beispiele für Initiatoren können der WO-A-99/40123, Seite 32, Zeile 45 bis Seite 34, Zeile 9 entnommen werden. Die Polymerisation kann auch durch Einwirkung energiereicher Strahlung wie UV- oder aktinischer oder radioaktiver Strahlung ausgelöst werden, wobei man gegebenenfalls in Gegenwart mindestens eines Sensibilisators arbeitet. Die Polymerisation der Monomeren in der Miniemulsion kann auch elektrochemisch, mit Hilfe von Mikrowellenstrahlen und/oder durch Einwirkung von Ultraschall erfolgen. Die Polymerisationstemperatur beträgt beispielsweise 0 bis 120°C, wobei sie bei Temperaturen oberhalb von 100°C unter erhöhtem DrucK in druckdichten Apparaturen vorgenommen wird. Meistens polymerisiert man die Miniemulsion in dem Temperaturbereich von 0 bis 95°C. Die Polymerisation der Monomeren der Miniemulsion kann nach allen bekannten Polymerisationsverfahren durchgeführt werden. Sie kann z.B. stufenlos oder auch zwei- oder mehrstufig erfolgen.

Die Polymerisation kann beispielsweise auch so durchgeführt werden, dass zunächst nur maximal 50 % der Monomeren polymerisieren, die sich in der Polymerisationszone befinden. Falls während der Polymerisation eine Unverträglichkeit zwischen den Wirkstoffen und dem sich ausbildenden Polymer eintritt, d.h. die Wirkstoffe sind in dem entstehenden Polymer bzw. der Mischung aus Monomer und dem sich bildenden Polymer nicht löslich, kann es dazu kommen, dass sich die Wirkstoffe im Kern des entstehenden Polymerteilchens sammeln und von einer Schale aus einem Polymer umhüllt werden. Man muß dann lediglich dem polymerisierenden System ausreichend Zeit geben, dass eine Separation der Wirkstoffe erfolgen kann. Die Polymerisation wird dann erst nach weitgehender oder vollständiger Ansammlung der Wirkstoffe im Kern der entstehenden Polymerteilchen zu Ende geführt. Mit Hilfe von Probenentnahmen während der Polymerisation kann man die Separation von Wirkstoff und dem sich ausbildenden Polymer verfolgen. Die Wirkstoffe können jedoch auch in Abhängigkeit von den Polymerisationsbedingungen gegebenenfalls teilweise in die wässrige Phase eintreten, Domänen im Polymerteilchen bilden, an die Oberfläche der Polymerteilchen wandern oder sich anderweitig im Polymer anreichern oder auch gleichmäßig verteilen.

Die Polymerisation der Miniemulsion kann jedoch auch stufenlos erfolgen, indem man z.B. 5 bis 30 % der zu polymerisierenden Miniemulsion vorlegt, die Polymerisation startet und die restliche Miniemulsion kontinuierlich oder portionsweise unter Polymerisationsbedingungen dosiert. Man kann jedoch auch geringere Mengen einer Miniemulsion in einer Polymerisationszone vorlegen und die restliche Miniemulsion unter Polymerisationsbedingungen kontinuierlich zufügen und polymerisieren.

Man kann die Polymerisation auch in mindestens zwei Stufen durchführen. Hierfür bereitet man zunächst eine mindestens einen Wirkstoff enthaltende Miniemulsion aus
(a) mindestens einem ethylenisch ungesättigtem Monomer A mit einer Wasserlöslichkeit von > 0,01 g/l (bei 25°Cund 1013 mbar),
(b) gegebenenfalls mindestens einem ethylenisch ungesättigtem Monomeren B mit einer Wasserlöslichkeit von < 0,01 g/l (bei 25°C und 1013 mbar) und
(c) gegebenenfalls mindestens einem ethylenisch ungesättigtem Monomer C mit wenigstens zwei Doppelbindungen,
und mindestens eines oberflächenaktiven Mittels und gegebenenfalls mindestens einer hydrophoben Verbindung, beispielsweise Dekahydronaphthalin oder Polyisobutylen, wobei die Wirkstoffe auch während des Emulgiervorgangs oder danach zur Miniemul sion zugegeben werden können, polymerisiert dann die Monomeren der Miniemulsion bis zu einem Umsatz von höchstens 50 %, dosiert anschließend eine wässrige Makroemulsion mindestens eines ethylenisch ungesättigten Monomers (c) mit wenigstens zwei Doppelbindungen im Molekül und führt die Polymerisation zu Ende.

Meistens geht man jedoch von einer Lösung mindestens eines Wirkstoffs in mindestens einem Monomer aus, die zunächst in Wasser in Gegenwart mindestens eines oberflächenaktiven Mittels zu einer Miniemulsion emulgiert wird. Danach polymerisiert man die Monomeren der Miniemulsion bis zu einem Umsatz von höchstens 35 %, gibt anschließend eine wässrige Makroemulsion mindestens eines ethylenisch ungesättigten Monomers (c) mit wenigstens zwei Doppelbindungen im Molekül unter Polymerisationsbedingungen zu und führt die Polymerisation der restlichen Monomeren entweder gleichzeitig mit der Dosierung des Monomers (c) oder danach zu Ende.

Man kann die Polymerisation jedoch auch stufenlos durchführen, indem man z.B. einen Teil der Miniemulsion vorlegt, die Polymerisation startet und die restliche Miniemulsion kontinuierlich oder portionsweise unter Polymerisationsbedingungen dosiert.

In einer anderen Ausführungsform der Erfindung gibt man zu einer auf Polymerisationstemperatur erhitzten Mischung aus einer vorgelegten, mindestens einen Wirkstoff enthaltenden Miniemulsion aus den Monomeren (a) und gegebenenfalls (b) einen Polymerisationsinitiator, der für die Initiierung von maximal 25 % der vorgelegten Monomeren ausreicht, fügt die verbliebenen Anteile dieser Miniemulsion und eine wässrige Mischung mindestens eines Monomers (c) zu und dosiert nach dem Verbrauch des zugesetzten Initiators durch Polymerisation weiteren Polymerisationsinitiator, um die restlichen Monomere zu polymerisieren.

Die Vernetzer gemäß (c), die optional eingesetzt werden können, werden entweder in Substanz zudosiert, wobei die Dosierung ganz am Anfang in die Vorlage - bevor die eigentliche Polymerisation beginnt - in einem Male oder aber auch im Zulauf-Verfahren erfolgen kann. Falls mindestens zwei Vernetzer eingesetzt werden, können diese entweder als Mischung oder getrennt voneinander synchron oder aber zeitversetzt dosiert werden. Die Vernetzer können auch zusammen mit den Monomeren in die Miniemulsion eingebracht werden. Man kann sie aber auch in Wasser emulgieren und insgesamt als Emulsionszulauf oder aber in Zulauffahrweise zusammen mit der Miniemulsion dosieren. Dabei ist es vorteilhaft, wenn zumindest ein Tensid die Stabilität der Vernetzer-Emulsion gewährleistet.

Vorzugsweise setzt man als Ölphase für die Miniemulsion
(a) Methylmethacrylat, Styrol, Vinylacetat, Methylacrylat, Ethylmethacrylat, Acrylsäure und/oder Methacrylsäure,
(b) Stearylacrylat, Laurylacrylat und/oder Palmitylacrylat
   und
(c) Butandioldiacrylat, Pentaerythrittetraacrylat, Pentaerythrittriacrylat, Allylacrylat, Allylmethacrylat, Divinylbenzol und/oder Trimethylolpropantriacrylat
ein.

Man erhält Wirkstoffe enthaltende wässrige Polymerdispersionen. Die Feststoffkonzentration dieser wässrigen Dispersionen beträgt 10 bis 60, vorzugsweise 20 bis 45 Gew.-%. Die wässrigen Polymerdispersionen enthalten dispergierte Teilchen mit einem mittleren Teilchendurchmesser <1000 nm, meistens < 500 nm, beispielsweise 5 bis 450 nm, vorzugsweise 10 bis 300 nm und insbesondere 50 bis 250 nm. Die Polymerteilchen bestehen im Wesentlichen aus einer Polymermatrix und enthalten mindestens ein Pestizid als Wirkstoff in einer Menge von 0,5 bis 60 Gew.-%. Diese Menge entspricht in der Regel den Mengen, die in der Ölphase der Miniemulsion eingesetzt werden, da durch die oben beschriebenen Verfahren erreicht wird, dass mindestens 80 Gew.-% vorzugsweise mindestens 90 Gew.-%, besonders bevorzugt mindestens 95 Gew.-% des eingesetzten Wirkstoffes in die erhaltenen Polymerpartikel einpolymerisiert werden.

Der Wirkstoff kann, wie bereits oben beschrieben, beispielsweise homogen in der Polymermatrix verteilt sein oder in Form von Domänen im Polymerteilchen vorliegen. Die dispergierten Teilchen können jedoch auch aus einem Kern und einer Schale aufgebaut sein, wobei der Kern der Teilchen mindestens einen Wirkstoff enthält, der von einer Schale aus einer Polymermatrix umhüllt ist. Der Wirkstoff kann jedoch auch zum Teil oder fast vollständig aus der Polymermatrix austreten. Es liegt dann in Form von Teilchen mit einem mittleren Durchmesser von ca. 40 bis 400 nm, die mit Hilfe von Tensiden stabilisiert sind, in der wässrigen Phase vor.

Aus den nach dem erfindungsgemäßen Verfahren hergestellten wässrigen Dispersionen können Polymerpulver gewonnen werden, die mindestens einen Wirkstoff enthalten, indem man die flüchtigen Bestandteile einer wässrigen, mindestens einen Wirkstoff enthaltenden Polymerdispersion verdampft. Die erfindungsgemäß hergestellten Dispersionen und die daraus gewonnenen Polymerpulver haben den Vorteil, dass sie die Wirkstoffe kontrolliert freisetzen und vor Zersetzung schützen, d.h. die Wirkstoffe werden über einen längeren Zeitraum kontinuierlich abgegeben und sind weitgehend vor äußeren Einflüssen geschützt. Die Wirkstoffe liegen somit in einer für ihre Anwendung besonders vorteilhaften Matrix vor.

Von technischem Interesse sind beispielsweise die aus den erfindungsgemäß hergestellten wässrigen Dispersionen z.B. durch Sprühtrocknung erhaltenen Polymerpulver, die einen Wirkstoff enthalten. Gemäß einer anderen Ausführungsform der Erfindung verwendet man eine wässrige Dispersion für den Pflanzenschutz, die dadurch erhältlich ist, dass man eine Miniemulsion polymerisiert, die mindestens einen Wirkstoff enthält.

Die erfindungsgemäß hergestellten Wirkstoffe enthaltenden, wässrigen Dispersionen sowie die daraus durch Entfernen der wässrigen Phase erhältlichen Polymerpulver, die mindestens einen Wirkstoff enthalten, werden vorzugsweise in agrochemischen Formulierungen eingesetzt. Der Begriff der agrochemischen Formulierung wird weiter unten erläutert. Die Erfindung betrifft daher auch die Verwendung der nach dem erfindungsgemäßen Verfahren hergestellten Dispersionen zur Regulation des Wachstums von Pflanzen und/oder zur Bekämpfung unerwünschten Pflanzenwuchses und/oder zur Bekämpfung von unerwünschtem Insekten- oder Milbenbefall auf Pflanzen und/oder zur Bekämpfung von phytopathogenen Pilzen und/oder zur Behandlung von Saatgut.

Das Verfahren und/oder zur Regulation des Wachstums von Pflanzen und /oder zur Bekämpfung von unerwünschtem Insekten- oder Milbenbefall auf Pflanzen und/oder zur Bekämpfung von phytopathogenen Pilzen und/oder zur Behandlung von Saatgut ist dadurch gekennzeichnet, dass man die phytopathogenen Pilze / Insekten - oder Milben, deren Lebensraum oder die vor Pilz- oder Insektenbefall zu schützenden Pflanzen, den Boden oder Saatgüter von Nutzpflanzen mit einer wirksamen Menge einer agrochemischen Formulierung umfassend eine nach dem erfindungsgemäßen Verfahren hergestellte Dispersion oder daraus durch Entfernen der wässrigen Phase erhältlichen Polymerpulver behandelt.

Das Verfahren zur Bekämpfung von unerwünschten Pflanzenwuchses ist dadurch gekennzeichnet, dass man Pflanzen, den Boden, auf denen die Pflanzen wachsen oder Saatgut mit einer wirksamen Menge einer agrochemischen Formulierung umfassend eine nach dem erfindungsgemäßen Verfahren hergestellte Dispersion oder daraus durch Entfernen der wässrigen Phase erhältlichen Polymerpulver behandelt.

Bekämpfung unerwünschten Pflanzenwuchses bedeutet die Bekämpfung/Zerstörung von Pflanzen, welche an Orten wachsen, an welchen sie unerwünscht sind, z.B. von dicotyledonen Pflanzen der Arten: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum;

Monocotyledone Pflanzen der Arten: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera.

Der Begriff unerwünschte Insekten- oder Milben beschreibt, ist aber nicht beschränkt auf folgende Gattungen:
Lepidoptera, zum Beispiel Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni und Zeiraphera canadensis;
Käfer (Coleoptera) zum Beispiel Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus und Sitophilus granaria;
Diptera, zum Beispiel Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea und Tipula paludosa;
Thysanoptera zum Beispiel Frankliniella fusca, Frankliniella occidentalis, Frankliniella tritici, Scirtothrips citri, Thrips oryzae, Thrips palmi und Thrips tabaci;
Hymenoptera zum Beispiel Athalia rosae, Atta cephalotes, Atta sexdens, Atta texana, Hoplocampa minuta, Hoplocampa testudinea, Monomorium pharaonis, Solenopsis geminata und Solenopsis invicta;
Heteroptera zum Beispiel Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis und Thyanta perditor;
Homoptera zum Beispiel Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiund, und Viteus vitifolii;
Termiten (Isoptera), z.B. Calotermes flavicollis, Leucotermes flavipes, Reticulitermes lucifugus und Termes natalensis;
Orthoptera, z.B. Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus und Tachycines asynamorus ;
Arachnoidea, zum Beispiel Acarina, z.B. aus den Familien Argasidae, Ixodidae und Sarcoptidae, z.B. Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, und Eriophyidae spp. z.B. Aculus schlechtendali, Phyllocoptrata oleivora und Eriophyes sheldoni; Tarsonemidae spp. z.B. Phytonemus pallidus und Polyphagotarsonemus latus; Tenuipalpidae spp. z.B. Brevipalpus phoenicis; Tetranychidae spp. z.B. Tetranychus cinnabarinus, Tetranychus kanzawai, Tetranychus pacificus, Tetranychus telarius und Tetranychus urticae, Panonychus ulmi, Panonychus citri, und oligonychus pratensis;
Nematoden, insbesonders Pflanzen parasitäre Nematoden, z.B.plant root knot Nematoden, Meloidogyne hapla, Meloidogyne incognita, Meloidogyne javanica, und andere Meloidogyne Species; cyst-forming Nematoden, Globodera rostochiensis und andere Globodera Species; Heterodera avenae, Heterodera glycines, Heterodera schachtii, Heterodera trifolii, und andere Heterodera Species; Seed gall Nematoden, Anguina Species; Stem und foliar Nematoden, Aphelenchoides Species; Sting Nematoden, Belonolaimus longicaudatus und andere Belonolaimus Species; Pine Nematoden, Bursaphelenchus xylophilus und andere Bursaphelenchus Species; Ring Nematoden, Criconema Species, Criconemella Species, Criconemoides Species, Mesocriconema Species; Stem und bulb NematodeN, Ditylenchus destructor, Ditylenchus dipsaci und andere Ditylenchus Species; Awl Nematodes, Dolichodorus Species; Spiral Nematoden, Heliocotylenchus multicinctus und andere Helicotylenchus Species; Sheath und sheathoid Nematoden, Hemicycliophora Species und Hemicriconemoides Species; Hirshmanniella Species; Lance Nematoden, Hoploaimus Species; false rootknot Nematoden, Nacobbus Species; Needle Nematoden, Longidorus elongatus und andere Longidorus Species; Lesion Nematoden, Pratylenchus neglectus, Pratylenchus penetrans, Pratylenchus curvitatus, Pratylenchus goodeyi und andere Pratylenchus Species; Burrowing Nematoden, Radopholus similis und andere Radopholus Species; Reniform Nematoden, Rotylenchus robustus und andere Rotylenchus Species; Scutellonema Species; Stubby root Nematoden, Trichodorus primitivus und andere Trichodorus Species, Paratrichodorus Species; Stunt Nematoden, Tylenchorhynchus claytoni, Tylenchorhynchus dubius und andere Tylenchorhynchus Species; Citrus Nematoden, Tylenchulus Species; Dagger Nematoden, Xiphinema Species;
sowie Reis Pathogene wie z.B. rice water weevil (Lissorhoptrus oryzaphilus), rice stem borer (Chilo suppresalis), rice leaf roller, rice leaf beetle, rice leaf miner (Agromyca oryzae), leafhoppers (Nephotettix spp.;especially smaller brown leafhopper, green rice leafhopper), planthoppers (Delphacidae; especially white backed planthopper, brown rice planthopper), stinkbugs;
Der Begriff phytopathogene Pilze beschreibt, ist aber nicht beschränkt auf, folgende Spezies:
   Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis an Äpfeln, Bipolaris- und Drechslera-Arten an Getreide, Reis und Rasen, Septoria nodorum an Weizen, Botrytis cinerea an Erdbeeren, Gemüse, Zierpflanzen und Reben, Mycosphaerella-Arten an Bananen, Erdnüssen und Getreide, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten, Bipolaris- und Drechslera-Arten sowie Pyricularia oryzae, Corticium sasakii (syn. Rhizoctonia solani) und Cochliobolus miyabeanus an Reispflanzen und ggf. an deren Saatgut, Paecilomyces variotii an Materialien wie Holz.

Mit Hilfe der Wirkstoffe, die in den Polymeren der erfindungsgemäß hergestellten wäßrigen Dispersionen enthalten sind, ist es möglich, unerwünschtes Pflanzenwachstum zu kontrollieren und/oder phytopathogene Insekten und/oder phytopathogene Pilze zu bekämpfen.

Weiterer Gegenstand der vorliegenden Erfindung sind agrochemische Formulierungen umfassend nach dem erfindungsgemäßen Verfahren erhältliche, Wirkstoffe enthaltende wässrige Polymerdispersionen oder Polymerpulver, die aus der nach dem erfindungsgemäßen Verfahren hergestellten Dispersion durch Entfernen der wässrigen Phase wie bereits oben erwähnt hergestellt wurden.

Hierbei können die nach dem erfindungsgemäßen Verfahren erhältliche, Wirkstoffe enthaltenden wässrigen Polymerdispersionen entweder direkt eingesetzt werden oder optional weitere für die Formulierung geeignete Hilfsmittel wie z.B. oberflächenaktive Stoffe (wie Netzmittel, Haftmittel, Emulgatoren oder Dispergiermittel), Schaumbekämpfungsmittel, Verdicker, Trägerstoffe, Frostschutzmittel sowie Bakterizide, enthalten. Die aus den nach dem erfindungsgemäßen Verfahren hergestellte Dispersionen erhältlichen Polymerpulver können entweder direkt eingesetzt werden oder optional weitere für die Formulierung geeignete Hilfsmittel (z.B. oberflächenaktive Stoffe (wie Netzmittel, Haftmittel, Emulgatoren oder Dispergiermittel), Schaumbekämpfungsmittel, Verdicker, Trägerstoffe, Frostschutzmittel sowie Bakterizide) sowie gegebenenfalls. Lösungsmittel enthalten.

Die Bedeutung und entsprechende Verwendung der oben genannten Mittel richtet sich nach dem angestrebten Formulierungstyp, sowie nach der Natur des Wirkstoffes. Falls Trägerstoffe eingesetzt werden, insbesondere in festen Formulierungen, so sind sie üblicherweise in einer Menge von 0,1 bis 99 Gew.-%, bevorzugt in 10 bis 80 Gew.-%, in den Formulierungen enthalten. Die Menge der anderen Hilfsmittel in den Formulierungen beträgt, sofern man sie einsetzt, beispielsweise 0,1 bis 40 Gew.-%.

Falls Lösungsmittel eingesetzt werden, kommen z.Bsp. Wasser, aromatische Lösungsmittel (z.B. Solvesso® Produkte, Xylol), Paraffine (z.B. Erdölfraktionen), Alkohole (z.B. Methanol, Butanol, Pentanol, Benzylalkohol), Ketone (z.B. Cyclohexanon, gamma-Butyrolacton), Pyrrolidone (NMP, NOP), Acetate (Glykoldiacetat), Glykole, Dimethylfettsäureamide, Fettsäuren und Fettsäureester in Betracht. Grundsätzlich können auch Lösungsmittelgemische verwendet werden.

Beispiele für Verdicker (d.h. Verbindungen, die der Formulierung ein pseudoplastisches Fließverhalten verleihen, d.h. hohe Viskosität im Ruhezustand und niedrige Viskosität im bewegten Zustand) sind beispielsweise Polysaccharide Xanthan Gum (Kelzan® der Fa. Kelco), Rhodopol® 23 (Rhone Poulenc) oder Veegum® (Firma R.T. Vanderbilt) oder anorganische Schichtmineralien wie Attagel® (Firma Engelhardt).

Als Entschäumer kommen beispielsweise Silikonemulsionen (z. B. Silikon® SRE, Firma Wacker oder Rhodorsil® der Firma Rhodia), langkettige Alkohole, Fettsäuren, fluororganische Verbindungen und deren Gemische in Betracht.

Bakterizide können beispielsweise zur Stabilisierung von wäßrigen agrochemischen Formulierungen eingesetzt werden. Geeignete Bakterizide sind beispielsweise Proxel® der Fa. ICI oder Acticid® RS der Fa. Thor Chemie und Kathon® MK der Firma Rohm & Haas. Geeignete Frostschutzmittel sind z.B. Ethylenglycol, Propylenglycol oder Glycerin.

Beispiele für Trägerstoffe sind natürliche Gesteinsmehle (z.B. Kaoline, Tonerden, Talkum, Kreide) und synthetische Gesteinsmehle (z.B. hochdisperse Kieselsäure, Silikate).

Beispiele für oberflächenaktive Stoffe sind Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylen-Fettalkoholether wie Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkyl-arylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpoly-glykoletheracetal, Sorbitester, Ligninsulfitablaugen und Methylcellulose.

Beispiele für Formulierungstypen, die sich auf Basis der Polymerpulver oder der erfindungsgemäßen Dispersionen herstellen lassen sind Suspensionen, dispergierbare Konzentrate, Pasten, Pastillen, benetzbare Pulver, Stäube (DP) oder Granulate (GR, FG, GG, MG), die entweder in Wasser löslich oder dispergierbar sein können, zu nennen. Gängige Formulierungstypen für die Saatgutbehandlung sind FS (flowable concentrates), DS (powders for dry treatment), WS (water dispersible powders for slurry treatment), SS (water-soluble powders SS). Die Herstellung dieser Formulierungen sowie die dafür benötigte Technologie ist dem Fachmann bekannt (vgl. US 3,060,084, EP-A 707 445 (für flüssige Konzentrate), Browning, "Agglomeration", Chemical Engineering, Dec. 4, 1967, 147-48, Perry's Chemical Engineer's Handbook, 4th Ed., Mc-Graw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 und Mollet, H., Grubemann, A., Formulation Technology, Wiley VCH Verlag GmbH, Weinheim (Federal Republic of Germany), 2001), 2. D. A. Knowles, Chemistry and Technology of Agrochemical Formulations, Kluwer Academic Publishers, Dordrecht, 1998 (ISBN 0-7514-0443-8).

Granulate werden beispielsweise fein gemahlen und mit 95,5 % Trägerstoffen verbunden. Gängige Verfahren sind dabei die Extrusion, die Sprühtrocknung oder die Wirbelschicht. Man erhält dadurch ein Granulat für die Direktapplikation.

Zur Herstellung von direkt versprühbaren Flüssigkeiten, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubemittel können durch Mischen oder gemeinsames Vermahlen der Wirkstoffe enthaltenden wässrigen Polymerdispersionen oder der daraus beispielsweise durch Sprühtrocknung erhältlichen Pulver mit einem festen Trägerstoff hergestellt werden.

Granulate, z.B. Umhüllungs-, Imprägnierungs- und Homogengranulate, können durch Bindung der erfindungsgemäß hergestellten Produkte an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe. Falls erforderlich, kann das erhaltene Endprodukt vor weiterer Verarbeitung getrocknet werden.

Die vorliegende Erfindung umfasst auch Saatgut, welches mit einer erfindungsgemäßen agrochemischen Formulierung behandelt wurde.

Der Begriff Saatgutbehandlung umfasst alle gängigen Techniken (seed dressing, seed coating, seed dusting, seed soaking, seed film coating, seed multilayer coating, seed encrusting, seed dripping, und seed pelleting).

Der Begriff Saatgut umfasst Saatgut aller Arten, wie z.B. Körner, Samen, Früchte, Knollen, Stecklinge und ähnliche Formen. Bevorzugt beschreibt der Begriff Saatgut hier Körner und Samen.

Geeignetes Saatgut sind Getreidesaaten, Halmfruchtsaaten, Hackfruchtsaaten, Ölsaaten, Gemüsesaaten, Gewürzsaatgut, Zierpflanzensaatgut, z.B. Saatgut von Hartweizen, Weizen, Gerste, Hafer, Roggen, Mais (Futtermais und Zuckermais), Soja, Ölsaaten, Kreuzblütler, Baumwolle, Sonnenblumen, Bananen, Reis, Raps, Rüben, Zuckerrüben, Futterrüben, Eierpflanzen, Kartoffeln, Gras, (Zier-)Rasen, Futtergras, Tomaten, Lauch, Kürbis, Kohl, Eisberg Salat, Pfeffer, Gurken, Melonen, Brassica spp, Melonen, Bohnen, Erbsen, Knoblauch, Zwiebeln, Karotten, Knollengewächse wie Zuckerrohr, Tabak, Weintrauben, Petunien und Geranien, Stiefmütterchen, Springkraut, bevorzugt Weizen, Mais, Soja und Reis.

Als Saatgut kann auch das Saatgut transgener oder durch herkömmliche Züchtungsmethoden erhaltener Pflanzen eingesetzt werden.

So kann Saatgut eingesetzt werden, das gegenüber Herbiziden, Fungiziden oder Insektiziden tolerant ist, z.B. gegenüber Sulfonylharnstoffen (z.B. EP-A-0257993, U.S. Pat. No. 5,013,659), Imidazolinonen (z.B. US 6222100, WO0182685, WO0026390, WO9741218, WO9802526, WO9802527, WO 04/106529, WO 05/20673, WO 03/14357, WO 03/13225, WO 03/14356, WO 04/16073), Glufosinate-Typ Herbiziden (z.B. EP-A-0242236, EP-A-242246) oder Glyphosate-Typ Herbiziden (z.B. WO 92/00377) oder Herbiziden aus der Klasser der Cyclohexadienone/ Aryloxyphenoxypropionsäuren (z.B. US 5,162,602 , US 5,290,696 , US 5,498,544 , US 5,428,001 , US 6,069,298 , US 6,268,550 , US 6,146,867 , US 6,222,099 , US 6,414,222); oder Saatgut transgener Pflanzen, z.B. Baumwolle, die Bacillus thuringiensis toxin (Bt toxins) produzieren und dadurch gegenüber bestimmten Schadorganismen gegenüber resistent sind (z.B. EP-A-0142924, EP-A-0193259).

Weiterhin kann auch Saatgut von Pflanzen eingesetzt werden, die im Vergleich mit herkömmlichen Pflanzen modifizierte Eigenschaften aufweisen, eingesetzt werden. Beispiele hierfür sind geänderte Stärkesynthese (z.B. WO 92/11376, WO 92/14827, z.B. WO 91/19806) oder Fettsäurezusammensetzungen (z.B. WO 91/13972).

Bei der Saatgutbehandlung werden im allgemeinen Aufwandmengen an Pestiziden von 0,1 bis 10kg/100 kg Saatgut, vorzugsweise 0,1 bis 5kg/100 kg, insbesondere 0,1 bis 2,5kg/100 kg verwendet.

### Beispiele

Die Prozentangaben in den Beispielen bedeuten Gewichtsprozent. Die Bestimmung der Tröpfchengröße der Miniemulsion erfolgte mit Hilfe eines Coulter N4 Plus Particle Analyzers an 0,01 gew.-%igen Proben der Emulsion. Die mittlere Teilchengröße der dispergierten Polymerteilchen wurde mit Hilfe eines Coulter LS 230 an 0,01 gew.-%igen Proben der wässrigen Dispersionen bestimmt.

### Beispiel 1

In einer Mischung aus 142,5 g Methylmethacrylat und 7,5 g Stearylacrylat wurden 30 g des Fungizids Epoxiconazol bei Raumtemperatur innerhalb von 15 Minuten gelöst.

Diese Lösung wurde dann in 15 g einer 15%igen wässrigen Natriumlaurylsulfatlösung und 663,56 g vollständig entsalztem Wasser eingetragen und darin emulgiert. Die so hergestellte Makroemulsion wurde anschließend mittels Ultraschall auf eine Tröpfchengröße von ca. 192 nm gebracht. Diese Miniemulsion war lagerstabil.

188,74 g (24% der Gesamtmenge) der Miniemulsion wurden in einem Reaktor vorgelegt und auf 80°C aufgeheizt. Bei 80°C wurden dann 4,5g einer 2%igen wässrigen Lösung von Natriumpersulfat auf einmal zugegeben. Anschließend dosierte man 597,82 g (76% der Gesamtmenge) der Miniemulsion und gleichzeitig in einem getrennten Zulauf eine gerührte Mischung (Emulsion) aus 15 g Wasser und 7,5 g Pentaerythrit-tetraacrylat und 0,75 g einer 15%igen wässrigen Natriumlaurylsulfatlösung innerhalb von jeweils 60 Minuten. Danach rührte man das Reaktionsgemisch noch 30 Minuten bei 80°C. Nach dieser Zeit waren ca.10% der Monomeren polymerisiert.

Um den Rest der Monomeren zu polymerisieren, dosierte man zu der auf 80°C erhitzten Reaktionsmischung über einen Zeitraum von 60 Minuten 70,5 g einer 2%igen wässrigen Lösung von Natriumpersulfat, rührte die Mischung zur Nachpolymerisation anschließend noch 60 Minuten bei 80°C, ließ sie dann auf 25°C abkühlen und filtrierte sie zunächst über ein 500µm- und dann über ein 125µm-Maschensieb, um das Koagulat zu entfernen.

Man erhielt so eine wässrige Polymerdispersion mit einem mittleren Teilchendurchmesser der Polymerteilchen von 136 nm. Wie die elektronenmikroskopische Aufnahmen an pulverförmigen Polymerteilchen, die durch Trocknen der wässrigen Dispersion erhalten wurden, zeigte, handelte sich um Kern-Schale-Teilchen, in denen das Fungizid Epoxiconazol zumindest teilweise in der Schale und das Polymer im Kern zu finden war. Die Dispersion war lagerstabil.

### Beispiel 2

In einer Mischung aus 190 g n-Butylacrylat und 10 g Stearylacrylat wurden 30 g des Fungizids Epoxiconazol bei 80°C innerhalb von 15 Minuten gelöst.

Diese Lösung wurde dann in eine 80°C heiße Lösung aus 20 g einer 15%igen wässrigen Natriumlaurylsulfatlösung und 844,7 g vollentsalztem Wasser eingetragen und emulgiert. Die so hergestellte Makroemulsion wurde dann durch dreimaliges Passieren durch einen APV-Gaulin Hochdruckhomogenisator (150 bar) bei 80°C auf eine Tröpfchengröße von ca. 200 nm gebracht. Diese Miniemulsion war 24 h lagerstabil.

1098,7 g (100% der Gesamtmenge) der Miniemulsion wurden bei 80°C in einem Reaktor vorgelegt. Bei 80°C wurden dann 6 g einer 2%igen wässrigen Lösung von Natriumpersulfat auf einmal zugegeben. Anschließend dosierte man eine gerührte Mischung (Emulsion) aus 20 g vollentsalztem Wasser und 10 g Pentaerythrit-tetraacrylat und 1,0 g einer 15%igen wässrigen Natriumlaurylsulfatlösung innerhalb von 60 Minuten. Danach rührte man das Reaktionsgemisch noch 30 Minuten bei 80°C. Nach dieser Zeit waren ca. 10% der Monomeren polymerisiert.

Um die Polymerisation zu Ende zu führen, dosierte man zu der auf 80°C erhitzten Reaktionsmischung über einen Zeitraum von 60 Minuten 94 g einer 2%igen wässrigen Lösung von Natriumpersulfat, rührte die Mischung zur Nachpolymerisation anschließend noch 60 Minuten bei 80°C. Durch Zugabe von 6 g tert.-Butylhydroperoxid und einer weiteren Nachreaktionszeit konnte die Polymerisation zu Ende geführt werden. Man ließ die Reaktionsmischung dann auf 25°C abkühlen und filtrierte sie über ein 500µm- und danach über ein 125µm-Maschensieb, um das Koagulat zu entfernen.

Man erhielt eine wässrige Polymerdispersion mit einem mittleren Teilchendurchmesser der Polymerteilchen von 134 nm. Die Dispersion war lagerstabil.

### Beispiel 3

In einer Mischung aus 190 g Methylmethacrylat und 10 g Stearylacrylat wurden 32,9 g des pulverförmigen Fungizids Triticonazol bei 80°C innerhalb von 15 Minuten gelöst.

Diese Lösung wurde dann in eine 80°C heiße Lösung aus 20 g einer 15%igen wässrigen Natriumlaurylsulfatlösung und 841,8 g vollentsalztem Wasser eingetragen und emulgiert. Die so hergestellte Makroemulsion wurde dann durch dreimaliges Passieren durch einen APV-Gaulin Hochdruckhomogeni-sator (150 bar) bei 80°C auf eine Tröpfchengröße von ca. 200 nm gebracht. Diese Miniemulsion war 24 h lagerstabil.

1094,7 g (100% der Gesamtmenge) der Miniemulsion wurden bei 80°C in einem Reaktor vorgelegt. Bei 80°C wurden dann 6 g einer 2%igen wässrigen Lösung von Natriumpersulfat auf einmal zugegeben. Anschließend dosierte man eine gerührte Mischung (Emulsion) aus 20 g vollentsalztem Wasser und 10 g Pentaerythrit-tetraacrylat und 1,0 g einer 15%igen wässrigen Natriumlaurylsulfatlösung innerhalb von 60 Minuten. Danach rührte man das Reaktionsgemisch noch 30 Minuten bei 80°C. Nach dieser Zeit waren ca. 10% der Monomeren polymerisiert.

Um die Polymerisation zu Ende zu führen, dosierte man zu der auf 80°C erhitzten Reaktionsmischung über einen Zeitraum von 60 Minuten 94 g einer 2%igen wässrigen Lösung von Natriumpersulfat, rührte die Mischung zur Nachpolymerisation anschließend noch 60 Minuten bei 80°C. Durch Zugabe von 8 g tert.-Butylhydroperoxid und einer weiteren Nachreaktionszeit konnte die Polymerisation zu Ende geführt werden. Man ließ die Reaktionsmischung dann auf 25°C abkühlen und filtrierte sie über ein 500µm- und danach über ein 125µm-Maschensieb, um das Koagulat zu entfernen.

Man erhielt eine wässrige Polymerdispersion mit einem mittleren Teilchendurchmesser der Polymerteilchen von 131 nm, wobei die Polymerteilchen praktisch das gesamte bei der Polymerisation eingesetzte Fungizid enthielten. Die Dispersion war lagerstabil.

## Patentansprüche

1. Verfahren zur Herstellung von Wirkstoffe enthaltenden wässrigen Polymerdispersionen mit einem mittleren Teilchendurchmesser der dispergierten Teilchen von < 1000 nm durch radikalische Polymerisation einer Öl-in-Wasser-Emulsion, deren Ölphase mindestens einen organischen Wirkstoff, welcher ausgewählt ist aus der Gruppe der Insektizide, der Fungizide, der Herbizide, der Wachstumsregulatoren und der Safener, und welcher eine Wasserlöslichkeit von nicht mehr als 5 g/l aufweist, in mindestens einem ethylenisch ungesättigten Monomeren enthält, **dadurch gekennzeichnet, dass** man eine Lösung mindestens eines Wirkstoffs in mindestens einem Monomer in Wasser in Gegenwart mindestens eines oberflächenaktiven Mittels zu einer Miniemulsion mit einer mittleren Tröpfchengröße <500 nm emulgiert und/oder mindestens einen Wirkstoff während des Emulgierens oder danach zusetzt und die Miniemulsion anschließend radikalisch polymerisiert.

2. Verfahren nach Anspruch 1, **dadurch gekennzeichnet, dass** man als ethylenisch ungesättigte Monomere
(a) 50 bis 100 Gew.-% mindestens eines ethylenisch ungesättigten Monomeren A mit einer Wasserlöslichkeit von > 0,01 g/l bei 25°C und 1013 mbar,
(b) 0 bis 50 Gew.-% mindestens eines ethylenisch ungesättigten Monomeren B mit einer Wasserlöslichkeit von < 0,01 g/l bei 25°C und 1013 mbar und
(c) 0 bis 30 Gew.-% mindestens eines ethylenisch ungesättigten Monomeren C mit wenigstens zwei Doppelbindungen
einsetzt.

3. Verfahren nach Anspruch 1 oder 2, **dadurch gekennzeichnet, dass** man als ethylenisch ungesättigte Monomere
(a) Methylmethacrylat, Styrol, Vinylacetat, Methylacrylat, Ethylacrylat, Ethylmethacrylat, n-Butylacrylat, Isobutylacrylat, tert.-Butylacrylat, Acrylsäure und/oder Methacrylsäure, Acrylamid, Methacrylamid, Acrylnitril und Methacrylnitril,
(b) gegebenenfalls Laurylacrylat, Palmitylacrylat und/oder Stearylacrylat und
(c) gegebenenfalls Butandioldiacrylat, Allylacrylat, Allylmethacrylat, Trimethylolpropantriacrylat, Divinylbenzol, Pentaerythrittriacrylat und/oder Pentaerythrittetraacrylat
einsetzt.

4. Verfahren nach einem der Ansprüche 1 bis 3, **dadurch gekennzeichnet, dass** man als ethylenisch ungesättigte Monomere
(a) Methylmethacrylat, Ethylmethacrylat und/oder Acrylsäure,
und
(c) Butandioldiacrylat, Pentaerythrittetraacrylat, Pentaerythrittriacrylat, Trimethylolpropantriacrylat, Allylmethacrylat und/oder Allylacrylat
einsetzt.

5. Verfahren nach einem der Ansprüche 1 bis 4, **dadurch gekennzeichnet, dass** man mindestens einen Wirkstoff während des Emulgiervorgangs zusetzt, dann die Monomeren der Miniemulsion bis zu einem Umsatz von höchstens 50 % polymerisiert, anschließend eine wässrige Makroemulsion mindestens eines ethylenisch ungesättigten Monomers (c) mit wenigstens zwei Doppelbindungen im Molekül unter Polymerisationsbedingungen dosiert und gleichzeitig oder danach die Polymerisation der restlichen Monomeren der Miniemulsion zu Ende führt.

6. Verfahren nach einem der Ansprüche 1 bis 4, **dadurch gekennzeichnet, dass** man eine Lösung mindestens eines Wirkstoffs in mindestens einem Monomer in Wasser in Gegenwart mindestens eines oberflächenaktiven Mittels zu einer Miniemulsion emulgiert, die Monomeren der Miniemulsion bis zu einem Umsatz von höchstens 35 % polymerisiert, anschließend eine wässrige Makroemulsion mindestens eines ethylenisch ungesättigten Monomers (c) mit wenigstens zwei Doppelbindungen im Molekül unter Polymerisationsbedingungen dosiert und gleichzeitig oder danach die Polymerisation der restlichen Monomeren der Miniemulsion zu Ende führt.

7. Verfahren nach Anspruch 5 oder 6, **dadurch gekennzeichnet, dass** man die Monomeren der Miniemulsion zunächst bis zu einem Umsatz von höchstens 25% polymerisiert.

8. Verfahren nach einem der Ansprüche 1 bis 7, **dadurch gekennzeichnet, dass** die Ölphase der Miniemulsion 0,5 bis 60 Gew.-%, bezogen auf die insgesamt eingesetzten Monomeren, mindestens eines Wirkstoffs enthält.

9. Verfahren nach einem der Ansprüche 1 bis 8, **dadurch gekennzeichnet, dass** man die Lösung mindestens eines Wirkstoffs in mindestens einem Monomer in Wasser in Gegenwart mindestens einer nichtpolymerisierbaren hydrophoben Verbindung emulgiert.

10. Wässrige Dispersion erhältlich nach einem Verfahren nach einem der Ansprüche 1 bis 9 mit einer Feststoffkonzentration von 10 bis 60 Gew.-%.

11. Agrochemische Formulierung umfassend eine wässrige Dispersion nach Anspruch 10 oder der daraus durch Verdampfen der flüchtigen Anteile herstellbaren Polymerpulver.

12. Verwendung der Dispersionen nach Anspruch 10 und der daraus durch Verdampfen der flüchtigen Anteile herstellbaren Polymerpulver, die mindestens einen Wirkstoff enthalten, zur Regulation des Wachstums von Pflanzen und/oder zur Bekämpfung unerwünschten Pflanzenwuchses und/oder zur Bekämpfung von unerwünschtem Insekten- oder Milbenbefall auf Pflanzen und/oder zur Bekämpfung von phytopathogenen Pilzen und/oder zur Behandlung von Saatgut.

13. Verfahren zur Regulation des Wachstums von Pflanzen und/oder zur Bekämpfung unerwünschten Pflanzenwuchses und /oder zur Bekämpfung von unerwünschtem Insekten- oder Milbenbefall und/oder zur Bekämpfung von phytopathogenen Pilzen und/oder zur Behandlung von Saatgut, **dadurch gekennzeichnet, dass** man die phytopathogenen Pilze und/oder Insekten - oder Milben, deren Lebensraum oder die vor Pilz- oder Insekten- oder Milbenbefall zu schützenden Pflanzen, den Boden oder Saatgüter von Nutzpflanzen bzw. die unerwünschten Pflanzen mit einer wirksamen Menge einer agrochemischen Formulierung nach Anspruch 11 behandelt.

14. Verfahren zur Bekämpfung unerwünschten Pflanzenwuchses, **dadurch gekennzeichnet, dass** man Pflanzen, den Boden oder deren Saatgüter mit einer wirksamen Menge einer agrochemischen Formulierung nach Anspruch 11 behandelt.

15. Saatgut behandelt mit mindestens einer agrochemischen Formulierung nach Anspruch 11.

## Claims

1. Process for producing active-substance-comprising aqueous polymer dispersions with an average particle size of the dispersed particles of <1000 nm by radical polymerization of an oil-in-water emulsion, the oil phase of which comprises at least one organic active substance, which is selected from the group of the insecticides, the fungicides, the herbicides, the growth regulators and the safeners, and which exhibits a solubility in water of not more than 5 g/l, in at least one ethylenically unsaturated monomer, **characterized in that** a solution of at least one active substance in at least one monomer is emulsified in water in the presence of at least one surface-active agent, to give a miniemulsion with an average droplet size <500 nm, and/or at least one active substance is added during the emulsification or afterwards, and subsequently the miniemulsion is polymerized under radical conditions.

2. Process according to Claim 1, **characterized in that** use is made, as ethylenically unsaturated monomers, of
(a) 50 to 100% by weight of at least one ethylenically unsaturated monomer A with a solubility in water of > 0.01 g/l at 25°C and 1013 mbar,
(b) 0 to 50% by weight of at least one ethylenically unsaturated monomer B with a solubility in water of < 0.01 g/l at 25°C and 1013 mbar and
(c) 0 to 30% by weight of at least one ethylenically unsaturated monomer C with at least two double bonds.

3. Process according to Claim 1 or 2, **characterized in that** use is made, as ethylenically unsaturated monomers, of
(a) methyl methacrylate, styrene, vinyl acetate, methyl acrylate, ethyl acrylate, ethyl methacrylate, n-butyl acrylate, isobutyl acrylate, tert-butyl acrylate, acrylic acid and/or methacrylic acid, acrylamide, methacrylamide, acrylonitrile and methacrylonitrile,
(b) if appropriate, lauryl acrylate, palmityl acrylate and/or stearyl acrylate, and
(c) if appropriate, butanediol diacrylate, allyl acrylate, allyl methacrylate, trimethylolpropane triacrylate, divinylbenzene, pentaerythritol triacrylate and/or pentaerythritol tetraacrylate.

4. Process according to any of Claims 1 to 3, **characterized in that** use is made, as ethylenically unsaturated monomers, of
(a) methyl methacrylate, ethyl methacrylate and/or acrylic acid,
and
(c) butanediol diacrylate, pentaerythritol tetraacrylate, pentaerythritol triacrylate, trimethylolpropane triacrylate, allyl methacrylate and/or allyl acrylate.

5. Process according to any of Claims 1 to 4, **characterized in that** at least one active substance is added during the emulsifying operation, then the monomers of the miniemulsion are polymerized up to a conversion of at most 50%, an aqueous macroemulsion of at least one ethylenically unsaturated monomer (c) with at least two double bonds in the molecule is subsequently metered in under polymerization conditions and, simultaneously or subsequently, the polymerization of the remaining monomers of the miniemulsion is brought to completion.

6. Process according to any of Claims 1 to 4, **characterized in that** a solution of at least one active substance in at least one monomer is emulsified in water in the presence of at least one surface-active agent to give a miniemulsion, the monomers of the miniemulsion are polymerized up to a conversion of at most 35%, an aqueous macroemulsion of at least one ethylenically unsaturated monomer (c) with at least two double bonds in the molecule is subsequently metered in under polymerization conditions and, simultaneously or subsequently, the polymerization of the remaining monomers of the miniemulsion is brought to completion.

7. Process according to Claim 5 or 6, **characterized in that** the monomers of the miniemulsion are first polymerized up to a conversion of at most 25%.

8. Process according to any of Claims 1 to 7, **characterized in that** the oil phase of the miniemulsion comprises 0.5 to 60% by weight, with reference to the total amount of monomers used, of at least one active substance.

9. Process according to any of Claims 1 to 8, **characterized in that** the solution of at least one active substance in at least one monomer is emulsified in water in the presence of at least one nonpolymerizable hydrophobic compound.

10. Aqueous dispersion, which can be obtained according to a process according to any of Claims 1 to 9 with a solids concentration of 10 to 60% by weight.

11. Agrochemical formulation, which comprises an aqueous dispersion according to Claim 10 or the polymer powders which can be prepared therefrom by evaporation of the volatile components.

12. Use of the dispersions according to Claim 10 and of the polymer powders comprising at least one active substance which can be prepared therefrom by evaporation of the volatile components for regulating the growth of plants and/or for combating undesirable plant growth and/or for combating undesirable insect or acarid infestation on plants and/or for combating phytopathogenic fungi and/or for seed treatment.

13. Process for regulating the growth of plants and/or for combating undesirable plant growth and/or for combating undesirable insect or acarid infestation and/or for combating phytopathogenic fungi and/or for seed treatment, **characterized in that** the phytopathogenic fungi and/or insects or acarids, their habitat or the plants, the soil or seeds of useful plants to be protected from fungal infestation or insect or acarid infestation or the undesirable plants are treated with an effective amount of an agrochemical formulation according to Claim 11.

14. Process for combating undesirable plant growth, **characterized in that** plants, the soil or their seeds are treated with an effective amount of an agrochemical formulation according to Claim 11.

15. Seed, treated with at least one agrochemical formulation according to Claim 11.

## Revendications

1. Procédé de fabrication de dispersions polymères aqueuses contenant des agents actifs ayant un diamètre de particule moyen des particules dispersées < 1 000 nm par polymérisation radicalaire d'une émulsion huile dans eau dont la phase huileuse contient au moins un agent actif organique, qui est choisi dans le groupe constitué par les insecticides, les fongicides, les herbicides, les régulateurs de croissance et les agents protecteurs, et qui présente une solubilité dans l'eau inférieure ou égale à 5 g/l, dans au moins un monomère éthyléniquement insaturé, **caractérisé en ce qu'**une solution d'au moins un agent actif dans au moins un monomère est émulsifiée dans de l'eau en présence d'au moins un agent tensioactif pour former une mini-émulsion ayant une taille de gouttelette moyenne < 500 nm, et/ou au moins un agent actif est ajouté pendant l'émulsification ou après, et la mini-émulsion est ensuite polymérisée par voie radicalaire.

2. Procédé selon la revendication 1, **caractérisé en ce que**
(a) 50 à 100 % en poids d'au moins un monomère éthyléniquement insaturé A ayant une solubilité dans l'eau > 0,01 g/l à 25 °C et 1 013 mbar,
(b) 0 à 50 % en poids d'au moins un monomère éthyléniquement insaturé B ayant une solubilité dans l'eau < 0,01 g/l à 25 °C et 1 013 mbar, et
(c) 0 à 30 % en poids d'au moins un monomère éthyléniquement insaturé C contenant au moins deux doubles liaisons,
sont utilisés en tant que monomères éthyléniquement insaturés.

3. Procédé selon la revendication 1 ou 2, **caractérisé en ce que**
(a) du méthacrylate de méthyle, du styrène, de l'acétate de vinyle, de l'acrylate de méthyle, de l'acrylate d'éthyle, du méthacrylate d'éthyle, de l'acrylate de n-butyle, de l'acrylate d'isobutyle, de l'acrylate de tert.-butyle, de l'acide acrylique et/ou de l'acide méthacrylique, de l'acrylamide, du méthacrylamide, de l'acrylonitrile et du méthacrylonitrile,
(b) éventuellement de l'acrylate de lauryle, de l'acrylate de palmityle et/ou de l'acrylate de stéaryle et
(c) éventuellement du diacrylate de butanediol, de l'acrylate d'allyle, du méthacrylate d'allyle, du triacrylate de triméthylolpropane, du divinylbenzène, du triacrylate de pentaérythritol et/ou du tétraacrylate de pentaérythritol,
sont utilisés en tant que monomères éthyléniquement insaturés.

4. Procédé selon l'une quelconque des revendications 1 à 3, **caractérisé en ce que**
(a) du méthacrylate de méthyle, du méthacrylate d'éthyle et/ou de l'acide acrylique,
et
(c) du diacrylate de butanediol, du tétraacrylate de pentaérythritol, du triacrylate de pentaérythritol, du triacrylate de triméthylolpropane, du méthacrylate d'allyle et/ou de l'acrylate d'allyle,
sont utilisés en tant que monomères éthyléniquement insaturés.

5. Procédé selon l'une quelconque des revendications 1 à 4, **caractérisé en ce qu'**au moins un agent actif est ajouté pendant le processus d'émulsification, puis les monomères de la mini-émulsion sont polymérisés jusqu'à une conversion d'au plus 50 %, puis une macro-émulsion aqueuse d'au moins un monomère éthyléniquement insaturé (c) contenant au moins deux doubles liaisons par molécule est ajoutée dans des conditions de polymérisation, et la polymérisation des monomères restants de la mini-émulsion est terminée simultanément ou ultérieurement.

6. Procédé selon l'une quelconque des revendications 1 à 4, **caractérisé en ce qu'**une solution d'au moins un agent actif dans au moins un monomère est émulsifiée dans de l'eau en présence d'au moins un agent tensioactif pour former une mini-émulsion, les monomères de la mini-émulsion sont polymérisés jusqu'à une conversion d'au plus 35 %, puis une macro-émulsion aqueuse d'au moins un monomère éthyléniquement insaturé (c) contenant au moins deux doubles liaisons par molécule est ajoutée dans des conditions de polymérisation, et la polymérisation des monomères restants de la mini-émulsion est terminée simultanément ou ultérieurement.

7. Procédé selon la revendication 5 ou 6, **caractérisé en ce que** les monomères de la mini-émulsion sont tout d'abord polymérisés jusqu'à une conversion d'au plus 25 %.

8. Procédé selon l'une quelconque des revendications 1 à 7, **caractérisé en ce que** la phase huileuse de la mini-émulsion contient 0,5 à 60 % en poids, par rapport aux monomères utilisés au total, d'au moins un agent actif.

9. Procédé selon l'une quelconque des revendications 1 à 8, **caractérisé en ce que** la solution d'au moins un agent actif dans au moins un monomère est émulsifiée dans de l'eau en présence d'au moins un composé hydrophobe non polymérisable.

10. Dispersion aqueuse pouvant être obtenue par un procédé selon l'une quelconque des revendications 1 à 9, ayant une concentration en solides de 10 à 60 % en poids.

11. Formulation agrochimique comprenant une dispersion aqueuse selon la revendication 10 ou la poudre polymère pouvant être préparée à partir de celle-ci par évaporation des fractions volatiles.

12. Utilisation des dispersions selon la revendication 10 et des poudres polymères pouvant être préparées à partir de celles-ci par évaporation des fractions volatiles, qui contiennent au moins un agent actif, pour réguler la croissance de plantes et/ou pour lutter contre une végétation indésirable et/ou pour lutter contre une infestation indésirable par des insectes ou des acariens sur des plantes et/ou pour lutter contre des champignons phytopathogènes et/ou pour traiter des graines.

13. Procédé pour réguler la croissance de plantes et/ou pour lutter contre une végétation indésirable et/ou pour lutter contre une infestation indésirable par des insectes ou des acariens et/ou pour lutter contre des champignons phytopathogènes et/ou pour traiter des graines, **caractérisé en ce que** les champignons phytopathogènes et/ou les insectes ou les acariens, leur habitat ou les plantes à protéger contre une infestation par des champignons ou des insectes ou des acariens, le sol ou les graines de plantes utiles ou les plantes indésirables sont traités avec une quantité efficace d'une formulation agrochimique selon la revendication 11.

14. Procédé pour lutter contre une végétation indésirable, **caractérisé en ce que** les plantes, le sol ou leurs graines sont traités avec une quantité efficace d'une formulation agrochimique selon la revendication 11.

15. Graines, traitées avec au moins une formulation agrochimique selon la revendication 11.
